(19) Europäisches Patentamt
European Patent Office
Office européen des brevets

(11) EP 4 761 902 B1

(12) EUROPEAN PATENT SPECIFICATION

(45) Date of publication and mention of the grant of the patent:
**26.08.2026 Bulletin 2026/35**

(21) Application number: **24833547.3**

(22) Date of filing: **18.12.2024**

(51) International Patent Classification (IPC):
***B29D 11/00*** *(2006.01)* ***G02B 1/14*** *(2015.01)*
***G02B 1/18*** *(2015.01)* ***G02B 1/118*** *(2015.01)*

(52) Cooperative Patent Classification (CPC):
**B29D 11/00009; B29D 11/00346; B29D 11/00865; G02B 1/118; G02B 1/14; G02B 1/18**

(86) International application number:
**PCT/EP2024/086988**

(87) International publication number:
**WO 2025/132496 (26.06.2025 Gazette 2025/26)**

(54) **METHOD FOR MANUFACTURING A SPECTACLE LENS COMPRISING A STRUCTURED COATING AND SPECTACLE LENS**

VERFAHREN ZUR HERSTELLUNG EINES BRILLENGLASES MIT EINER STRUKTURIERTEN BESCHICHTUNG UND BRILLENGLAS

PROCÉDÉ DE FABRICATION D'UN VERRE DE LUNETTES COMPRENANT UN REVÊTEMENT STRUCTURÉ ET VERRE DE LUNETTES

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**

(30) Priority: **21.12.2023 EP 23219483**

(43) Date of publication of application:
**24.06.2026 Bulletin 2026/26**

(60) Divisional application:
**26166164.9**

(73) Proprietor: **Carl Zeiss Vision International GmbH**
**73430 Aalen (DE)**

(72) Inventors:
- **KARIM, Waiz**
  **73450 Aalen (DE)**
- **KARASU KILIÇ, Feyza**
  **1015 Lausanne (CH)**
- **LETERRIER, Yves**
  **1015 Lausanne (CH)**
- **HUGENBERG, Norbert**
  **73430 Aalen (DE)**
- **BECKERS, Svenja**
  **73430 Aalen (DE)**

(74) Representative: **Carl Zeiss AG - Patentabteilung**
**Carl-Zeiss-Straße 22**
**73447 Oberkochen (DE)**

(56) References cited:
**CN-A- 109 975 896**
**US-A1- 2004 253 369**
**US-A1- 2013 095 290**
**US-A1- 2018 229 420**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).



Processed by Luminess, 75001 PARIS (FR)

## Description

The present invention relates to a method for manufacturing a spectacle lens according to the preamble of claim 1, alternatively according to the preamble of any one of claims 3.

### Related prior art

CN 109 975 896 A1 discloses an antireflection lens. The antireflection layer thereof is formed by recessing a template with a nanopattern in a sol-gel composition on a surface of the lens body and, after curing of the sol-gel composition and removal of the template, the antireflection layer comprises a nanostructure corresponding to said nanopattern.

WO 2017/025128 A1 discloses an article having a nanotextured surface with hydrophobic properties, said nanotextured surface comprising an array of pillars defined by a surface fraction of the pillars, a pitch of the pillars and an aspect ratio of the pillars.

CN 109 975 896 A discloses a method for manufacturing a spectacle lens according to the preamble of claim 1 or the preamble of claim 3.

### Problem to be solved

Departing from WO 2017/025128 A1, page 5, lines 3 to 6, describing a material of an uncoated nanotextured surface being a hydrophobic material in connection with WO 2017/025128 A1, page 5, lines 6 to 9, describing an article being a transparent article in connection with WO 2017/025128 A1, page 6, lines 1 to 3, describing to choose a pillar height so that to obtain an anti-reflective nanotextured surface, in connection with WO 2017/025128 A1, page 14, lines 26 to 30, preparing the article with the nanostructured surface by nanoimprint lithography, the problem to be solved by the present invention is to provide a spectacle lens with additionally enhanced abrasion resistance.

### Summary of the invention

The problem has been solved by the method according to claim 1, alternatively according to claim 3.

The method for manufacturing a spectacle lens comprises the step of

- curing a structured coating material on a surface of a spectacle lens, said structured coating material resulting in a structured coating on said surface of said spectacle lens,

  a structure of said structured coating providing a reduced light reflection to said spectacle lens, said structured coating material being a coating material, said coating material resulting in a coating providing an enhanced hydrophobicity to said spectacle lens, irrespective of said structure of said structured coating,
  and the method is characterized in that

- said coating material resulting in said coating provides an enhanced abrasion resistance to said spectacle lens, irrespective of said structure of said structured coating.

The method for manufacturing a spectacle lens comprises the step of

- curing a structured coating material on a surface of a spectacle lens, said structured coating material resulting in a structured coating on said surface of said spectacle lens,

  a structure of said structured coating providing a reduced light reflection to said spectacle lens, said structured coating material being a coating material, said coating material resulting in a coating providing an enhanced hydrophobicity to said spectacle lens, irrespective of said structure of said structured coating,
  said coating material resulting in said coating provides an enhanced abrasion resistance to said spectacle lens, irrespective of said structure of said structured coating,
  characterized in that
  said coating is providing said enhanced abrasion resistance to said spectacle lens compared to an abrasion resistance of a spectacle lens without said coating, when a Bayer ratio of said spectacle lens comprising said coating is equal to or greater than at least one of the following Bayer ratios:

  (i) a Bayer ratio being equal to or greater than 3,

(ii) a Bayer ratio being equal to or greater than 3.5,
(iii) a Bayer ratio being equal to or greater than 4,
(iv) a Bayer ratio being equal to or greater than 4.5,

the Bayer ratio being determined as a difference in haze of a reference spectacle lens having a refractive index of 1.5 divided by a difference in haze of said spectacle lens comprising said coating or the Bayer ratio being determined as a difference in haze of a reference spectacle lens having a refractive index of 1.5 divided by a difference in haze of said spectacle lens without said coating, each difference in haze being determined as difference in haze after and before abrasion in presence of an abrasive medium.

Alternatively, the method for manufacturing a spectacle lens comprises the step of

- curing a structured coating material on a surface of a spectacle lens, said structured coating material resulting in a structured coating on said surface of said spectacle lens,

a structure of said structured coating providing a reduced light reflection to said spectacle lens, said structured coating material being a coating material, said coating material resulting in a coating providing an enhanced hydrophobicity to said spectacle lens, irrespective of said structure of said structured coating,
said coating material resulting in said coating provides an enhanced abrasion resistance to said spectacle lens, irrespective of said structure of said structured coating,
characterized in that
said coating material comprises a fluorine-free surfactant.

Alternatively, the method for manufacturing a spectacle lens comprises the step of

- curing a structured coating material on a surface of a spectacle lens, said structured coating material resulting in a structured coating on said surface of said spectacle lens,

a structure of said structured coating providing a reduced light reflection to said spectacle lens, said structured coating material being a coating material, said coating material resulting in a coating providing an enhanced hydrophobicity to said spectacle lens, irrespective of said structure of said structured coating,
said coating material resulting in said coating provides an enhanced abrasion resistance to said spectacle lens, irrespective of said structure of said structured coating,
characterized in that
said coating material comprises a surfactant in one of the following ranges:

A) a range of 0.1 percent by weight to 1.5 percent by weight,
B) a range of 0.2 percent by weight to 1.4 percent by weight,
C) a range of 0.3 percent by weight to 1.3 percent by weight,
D) a range of 0.4 percent by weight to 1.2 percent by weight,

each based on the total weight of the coating material.

Alternatively, the method for manufacturing a spectacle lens comprises the step of

- curing a structured coating material on a surface of a spectacle lens, said structured coating material resulting in a structured coating on said surface of said spectacle lens,

a structure of said structured coating providing a reduced light reflection to said spectacle lens, said structured coating material being a coating material, said coating material resulting in a coating providing an enhanced hydrophobicity to said spectacle lens, irrespective of said structure of said structured coating,
said coating material resulting in said coating provides an enhanced abrasion resistance to said spectacle lens, irrespective of said structure of said structured coating,
characterized in that
said coating material comprising i) a hydrolysed organosilane, the organosilane being selected from at least one of the group consisting of (3-glycidyloxypropyl)trimethoxysilane, (3-glycidyloxypropyl)triethoxysilane and 2-(3,4-epoxycyclohexyl) ethyl trimethoxysilane, and ii) an epoxide, in at least one of the following percent by weight ratios:

A) said epoxide being 7 to 11 percent by weight of said hydrolysed organosilane,
B) said epoxide being 8 to 10 percent by weight of said hydrolysed organosilane.

A "spectacle lens" is as defined in ISO 13666:2019(E), entry 3.5.2, an ophthalmic lens (3.5.1) worn in front of, but not in contact with, an eyeball. Preferably, the spectacle lens is a clear spectacle lens, the clear spectacle lens as defined in ISO 13666:2019(E), entry 3.5.7, as spectacle lens (3.5.2) with no intended colour/tint in transmission. Alternatively, the spectacle lens may be a spectacle lens selected from the group consisting of a tinted spectacle lens, the tinted spectacle lens as defined in ISO 13666:2019(E), entry 3.5.6, a photochromic spectacle lens, the photochromic spectacle lens as defined in ISO 13666:2019(E), entry 3.5.11, and a polarizing spectacle lens, the polarizing spectacle lens as defined in ISO 13666:2019(E), entry 3.5.12. With respect to the tinted spectacle lens, the noticeable colour in transmission may be realized by (i) an optical material of the spectacle lens or by (ii) one or more surface layer(s) added to the spectacle lens. With respect to the photochromic spectacle lens, the reversible changes in luminous transmittance may be realized by (i) an optical material of the spectacle lens or by (ii) one or more surface layer(s) added to the spectacle lens. With respect to the polarizing spectacle lens, the differential absorption may be realized by (i) at least one of a single layer polarizing film and a multilayer polarizing film embedded in an optical material of the spectacle lens or by (ii) one or more surface layer(s) added to the spectacle lens. The optical material is as defined in ISO 13666:2019(E), entry 3.3.1, a transparent material capable of being manufactured into optical components. The optical material preferably is selected from one of a thermosetting hard resin as defined in ISO 13666:2019(E), entry 3.3.3, and a thermoplastic hard resin as defined in ISO 13666:2019(E), entry 3.3.4.

"Curing" is defined analogously as in ISO 4618:2023(E), entry 3.71, as a process by which a coating material changes from its original state into a stable solid coating (3.46). Preferably, analogously as in note 1 to entry 3.71 of ISO 4618:2023(E), curing is achieved by at least one of heat, UV radiation, electron beam radiation and a catalyst. A catalyst is defined analogously as in ISO 4618:2023(E), entry 3.37, a substance that promotes chemical curing (3.71) of a coating material. Thus, curing the coating material on a surface of the spectacle lens is the process by which the coating material on said surface of the spectacle lens changes from an original state of said coating material into a stable solid coating on said surface of the spectacle lens. Preferably, curing of the coating material on the surface of the spectacle lens is achieved by UV radiation, preferably in presence of a photoinitiator. Preferably, the coating material on the surface of the spectacle lens is UV cured and the resulting coating on said surface of the spectacle lens is thermally post cured. Preferably, curing the coating material on the surface of the spectacle lens is a last step in manufacturing the spectacle lens. Preferably, in a previous step the coating material is applied to the surface of the spectacle lens. The coating material is applied to the surface of the spectacle lens via spin coating, for example.

"Curing a structured coating material" is defined analogously as in ISO 4618:2023(E), entry 3.71, as a process by which a coating material that is structured changes from an original state of said coating material into a stable solid coating that is structured. Preferably, analogously as is note 1 to entry 3.71 of ISO 4618:2023(E), curing of the structured coating material is achieved by at least one of heat, UV radiation, electron beam radiation and a catalyst. Thus, curing the structured coating material on a surface of the spectacle lens is the process by which the coating material that is structured and that is on said surface of the spectacle lens changes from the original state of said coating material into the stable solid coating that is structured and that is on said surface of the spectacle lens. In other words, the coating material comprising a structure is cured in presence of said structure and in retention of said structure, i.e., said structure is same in said coating material before curing and in said coating after curing. Preferably, curing of the structured coating material on the surface of the spectacle lens is achieved by UV radiation, preferably in presence of the photoinitiator. Preferably, the structured coating material on the surface of the spectacle lens is UV cured and the resulting structured coating on said surface of the spectacle lens is thermally post cured. Preferably, curing the structured coating material on the surface of the spectacle lens is a last step in manufacturing the spectacle lens. Preferably, in a previous step the coating material on the surface of the spectacle lens is structured. The coating material on the surface of the spectacle lens is structured by nanoimprint lithography or UV-nanoimprint lithography, for example.

A "structured coating material" is defined analogously as in ISO 4618:2023(E), entry 3.171, as coating material having a surface structure. The structured coating material on the surface of the spectacle lens is the coating material that is structured and that is on the surface of the spectacle lens, i.e., said coating material on the surface of the spectacle lens is having the surface structure. The surface structure of the structured coating material is defined analogously as in ISO 4618:2023(E), entry 3.246, as shape or form of a surface of the structured coating material. The structured coating material may be a nanostructured coating material, the nanostructured coating material defined analogously as in ISO 4618:2023(E), entry 3.171, as a coating material having a surface structure in nanoscale (3.170). Nanoscale is as defined in ISO 4618:2023(E), entry 3.170, a length range from approximately 1 nm to 100 nm.

A "coating material" is defined analogously as in ISO 4618:2013(E), entry 3.48, as a product, preferably in liquid or paste form, that, when applied to a surface of the spectacle lens, forms a layer possessing specific properties. The coating material, when applied to the surface of the spectacle lens, for example via spin coating, forms the layer on said surface of the spectacle lens, said layer possessing specific properties, and said layer, after curing, results in a coating on

said surface of the spectacle lens, said coating providing specific properties to the spectacle lens. Preferably, the coating material, when applied to the surface of the spectacle lens, for example via spin coating, forms a single layer on said surface of the spectacle lens, said single layer possessing specific properties, and said single layer, after curing, results in a single layer coating on said surface of the spectacle lens, said single layer coating providing specific properties to the spectacle lens. The single layer formed on the surface of the spectacle lens preferably is a continuous single layer.

A "surface of the spectacle lens" preferably is at least one of a front surface and a back surface of the spectacle lens. The front surface of the spectacle lens is as defined in ISO 13666:2019(E), entry 3.2.13, a surface of the spectacle lens (3.5.2) intended to be fitted away from an eye. The back surface of the spectacle lens is as defined in ISO 13666:2019(E), entry 3.2.14, a surface of the spectacle lens (3.5.2) intended to be fitted nearer to an eye. The surface of the spectacle lens preferably is uncoated. The surface of the spectacle lens may be precoated, i.e., the spectacle lens may comprise one surface layer or more surface layers in addition to the structured coating. In case the surface of the spectacle lens is precoated, preferably, the structured coating is an outermost surface layer. The surface of the spectacle lens may be precoated, for example, with one or more surface layer(s) to obtain or to result in at least one of the group consisting of the tinted spectacle lens, the photochromic spectacle lens and the polarising spectacle lens.

The structured coating material is "resulting in a structured coating" by curing said structured coating material. The structured coating material on the surface of the spectacle lens is resulting in the structured coating on said surface of the spectacle lens by curing said structured coating material on said surface of said spectacle lens.

A "structured coating" is a coating having a surface structure. The structured coating on the surface of the spectacle lens is the coating that is structured and that is on the surface of the spectacle lens, i.e., said coating on the surface of the spectacle lens is having the surface structure. The surface structure of the structured coating is defined analogously as in ISO 4618:2023(E), entry 3.246, as shape or form of a surface of the structured coating. Preferably, the structured coating on the surface of the spectacle lens results, after curing, from a single layer of the coating material on said surface of the spectacle lens, said single layer of said coating material being structured. Preferably, the single layer of the coating material on the surface of the spectacle lens is a continuous single layer of said coating material on said surface of the spectacle lens. In other words, preferably the structured coating on the surface of the spectacle lens is a single layer coating that is structured. Preferably, the structured coating on the surface of the spectacle lens is a continuous single layer coating that is structured. The structured coating may be a nanostructured coating, the nanostructured coating as defined in ISO 4618:2023(E), entry 3.171, as a coating (3.46) having a surface structure (3.246) in the nanoscale (3.170).

A "structure" of the structured coating on the surface of the spectacle lens is formed such that said structured coating on said surface of the spectacle lens is reducing a light reflection of the spectacle lens when compared to a light reflection of said spectacle lens without said structured coating. In other words, the structure of the structured coating on the surface of the spectacle lens is selected such that said structured coating on said surface of the spectacle lens preferably replaces an anti-reflective coating on said surface of the spectacle lens, for example, a multilayer anti-reflective coating commonly used for spectacle lenses. The anti-reflective coating is as defined in ISO 13666:2019(E), entry 3.18.3, a coating on the surface of the spectacle lens intended to reduce light reflected from its surface. The structure of the structured coating on the surface of the spectacle lens preferably consists of an arrangement of individual elements, said arrangement of individual elements being the surface structure of the structured coating. The dimensions of the individual elements in x,y direction and in z direction preferably are selected such as to be comparable to or smaller than wavelengths of visible radiation (light), the visible radiation having as defined in note 2 to entry 3.1.2 of ISO 13666:2019(E) a lower limit of 380 nm and an upper limit of 780 nm. The individual elements in said arrangement may be formed as at least one of cones, columns and fibres or they may be of a random shape. The arrangement of the individual elements can be periodic, i.e., the distance between neighbouring individual elements is constant throughout the structured coating. Alternatively, the arrangement of the individual elements can vary, i.e., the distance between neighbouring individual elements is not constant throughout the structured coating either in a defined way or in a random distribution. The individual elements preferably are of the same material as the coating material and formed, for example, by nanolithography imprinting or UV nanolithography imprinting.

Preferably, the structure of the coating material on the surface of the spectacle lens and the structure of the coating on said surface of the spectacle lens is same, i.e., the structure is same before and after curing said coating material on the surface of the spectacle lens.

Preferably, the structured coating comprises the structure over the entire surface of the structured coating, i.e., the coating is structured over the entire surface of said coating.

The structure of the structured coating is "providing a reduced light reflection" to the spectacle lens when said structured coating is behaving as an anti-reflective coating. The structure of the structured coating on the surface of the spectacle lens is providing the reduced light reflection to the spectacle lens when said structured coating on said surface of the spectacle lens is acting as anti-reflective coating of the spectacle lens. Preferably, the structure of the structured coating on the surface of the spectacle lens is providing the reduced light reflection to the spectacle lens when a luminous reflectance of the spectacle lens comprising said structured coating is comparable to a luminous reflectance of a spectacle lens coated with an anti-reflective coating. In other words, the structure of the structured coating on the surface of the

spectacle lens is providing the reduced light reflection to the spectacle lens when the luminous reflectance of said spectacle lens is comparable to the luminous reflectance of said spectacle lens but comprising a different anti-reflective coating, i.e., comprising as anti-reflective coating not said structured coating. Preferably, the structure of the structured coating is providing the reduced light reflection to the spectacle lens when the luminous reflectance of the spectacle lens comprising the structured coating, compared to a luminous reflectance of said spectacle lens without said structured coating or without the structure of said coating, is reduced by at least one of the following luminous reflectance:

(i) the luminous reflectance being reduced by at least 2 percentage points,
(ii) the luminous reflectance being reduced by at least 2.5 percentage points,
(iii) the luminous reflectance being reduced by at least 3 percentage points,
(iv) the luminous reflectance being reduced by at least 3.5 percentage points.

The luminous reflectance is defined analogously as in ISO 13666:2019(E), entry 3.17.16, as a ratio of a luminous flux reflected by the surface of the spectacle lens i) with structured coating, ii) without structured coating or iii) without coating, to an incident luminous flex, usually for a specified illuminant and photopic vision.

Preferably, the luminous reflectance is calculated according to
Luminous reflectance = 100% - luminous transmittance, i.e. 100% minus luminous transmittance.

Preferably, the luminous transmittance is calculated according to the formula of note 1 to entry 3.17.6 of ISO 13666:2019(E) using measured values of the spectral transmittance.

Preferably, the measured values of the spectral transmittance comprises contributions from both the front surface and the back surface of the spectacle lens, as an entrance surface and an exit surface of incident light at an angle of incidence of 0°.

The luminous reflectance therefore comprises contributions as well from both the front surface and the back surface of the spectacle lens, as the entrance surface and the exit surface of said spectacle lens.

Preferably, the luminous reflectance is given with respect to the spectacle lens comprising on one surface only the structured coating or the coating without the structure.

The unit percentage points express the difference between two values given in percent. For example, the difference in luminous reflectance between a spectacle lens with 4% luminous reflectance and a spectacle lens with 2 % luminous reflectance is two percentage points.

The spectral transmittance of the spectacle lens comprising the structured coating or the coating without the structure or of said spectacle lens without any coating preferably is measured by using a Lambda 950S instrument, company PerkinElmer.

The structured coating material "being" a coating material means that a composition of said structured coating material and said coating material is same. The only difference between the structured coating material and the coating material is that the structured coating material is a structured version of said coating material. In other words, the coating material, or the composition of the coating material, is same before and after structuring. The coating material on the surface of the spectacle lens is, before structuring said coating material, an unstructured version of the structured coating material on said surface of the spectacle lens. The coating material on the surface of the spectacle lens is transferred, by curing said coating material on said surface of the spectacle lens, in a coating on said surface of the spectacle lens, said coating providing an enhanced hydrophobicity and an enhanced abrasion resistance to the spectacle lens, compared to a hydrophobicity and an abrasion resistance of said spectacle lens without said coating. Preferably, said coating material on the surface of the spectacle lens forms a single layer of said coating material on said surface of the spectacle lens, preferably a continuous single layer of said coating material. Accordingly, after curing, said single layer of said coating material, preferably said continuous single layer of said coating material, on the surface of the spectacle lens results in a single layer coating, preferably a continuous single layer coating, on said surface of the spectacle lens. Preferably, the single layer coating, preferably the continuous single layer coating, on the surface of the spectacle lens is responsible for two properties of the spectacle lens, the enhanced hydrophobicity and the enhanced abrasion resistance, compared to a hydrophobicity and an abrasion resistance of said spectacle lens without said single layer coating, preferably without said continuous single layer coating. Structuring said coating material, for example, by imprinting said coating material, for example via nanoimprint lithography or UV-nanoimprint lithography, on said surface of the spectacle lens, results in the structured coating material on said surface of the spectacle lens. As, preferably, the coating material forms the single layer coating material, preferably the continuous single layer coating material, on the surface of the spectacle lens, structuring said single layer coating material, preferably said continuous single layer coating material, on said surface of the spectacle lens results in a structured single layer coating material, preferably a structured continuous single layer coating material, on said surface of the spectacle lens. The structured coating material on said surface of the spectacle lens is transferred, by curing said structured coating material on said surface of the spectacle lens, in the structured coating on said surface of the spectacle lens. The structure of said structured coating on said surface of the spectacle lens is providing the reduced light reflection to the spectacle lens, compared to a light reflection of said spectacle lens without said structured coating. As,

preferably, the structured coating material on the surface of the spectacle lens is the structured single layer coating material, preferably the structured continuous single layer coating material, the resulting structured coating on said surface of the spectacle lens, after curing of said structured single layer coating material, preferably said structured continuous single layer coating material, is a structured single layer coating, preferably a structured continuous single layer coating. Preferably, a structure of the structured single layer coating, preferably a structure of the structured continuous single layer coating, on the surface of the spectacle lens, is responsible for one property of the spectacle lens, the reduced light reflection compared to a light reflection of said spectacle lens without said structured single layer coating, preferably without said structured continuous single layer coating.

Irrespective of the coating material on the surface of the spectacle lens being structured or not, the resulting coating on said surface of the spectacle lens, irrespective of being structured or not, i.e., a respective structured coating after curing the structured coating material or a respective coating after curing the coating material, is responsible for two properties of the spectacle lens, enhancing the hydrophobicity and enhancing the abrasion resistance, compared to a hydrophobicity and an abrasion resistance of said spectacle lens without said respective coating or without said respective structured coating. These two properties preferably are due to said coating material, irrespective of being structured or not, resulting, after curing in the respective coating or the respective structured coating. Simultaneously, the structure of the structured coating on the surface of the spectacle lens is responsible for one property of the spectacle lens, reducing the light reflection, compared to a light reflection of said spectacle lens without said structured coating or even compared to a light reflection of said spectacle lens comprising the respective coating but without the structure.

In other words, the coating on the surface of the spectacle lens is structured, the structure of the structured coating contributes the additional property, reduced light reflection, to the spectacle lens, whereas a respective coating material, after curing, already provides two properties, enhanced hydrophobicity and enhanced abrasion resistance, to the spectacle lens, each property compared to a respective property of said spectacle lens without said structured coating. The respective coating material is the coating composition on which the structured coating is based, i.e., the respective coating material is applied to the surface of the spectacle lens, structured and cured to result in the structured coating. Curing the coating material on the surface of the spectacle lens without structuring the coating material results in the coating on said surface of the spectacle lens that provides two properties, enhanced hydrophobicity and enhanced abrasion resistance, to the spectacle lens, compared to a hydrophobicity and an abrasion resistance of said spectacle lens without said coating. Thus, the key benefit of the structured coating, preferably the structured single layer coating, preferably the structured continuous single layer coating, on the surface of the spectacle lens is to provide a combination of three properties, reduced light reflection, enhanced hydrophobicity and enhanced abrasion resistance to the spectacle lens, compared to respective properties of said spectacle lens without said structured coating, preferably said structured single layer coating, preferably said structured continuous single layer coating.

The coating material on the surface of the spectacle lens before structuring is referred to as "coating material", the coating material after structuring on said surface of the spectacle lens is referred to as "structured coating material".

A coating material is "resulting in a coating" by curing the coating material. The coating material on the surface of the spectacle lens is cured to result in the coating on said surface of the spectacle lens.

The coating material resulting in the coating is "providing an enhanced hydrophobicity" to the spectacle lens i) when said coating is behaving as a hydrophobic coating, the hydrophobic coating defined as in ISO 13666:2019(E), entry 3.18.5, as a coating on the surface of the spectacle lens (3.5.2) intended to repel water droplets or ii) when said coating is behaving as a clean coating, the clean coating defined as in ISO 13666:2019(E), entry 3.18.4, as coating on the surface of the spectacle lens (3.5.2) intended to make the surface repel dust and grease and/or to make the surface easier to clean. The coating on the surface of the spectacle lens is providing the enhanced hydrophobicity to the spectacle lens when said coating on said surface of the spectacle lens is acting as hydrophobic coating of the spectacle lens or when said coating on said surface of the spectacle lens is acting as clean coating of the spectacle lens. The coating on the surface of the spectacle lens is providing the enhanced hydrophobicity to the spectacle lens irrespective of said coating being structured or said coating not being structured, the enhanced hydrophobicity compared to a hydrophobicity of said spectacle lens without said coating. In other words, the structured coating on the surface of the spectacle lens is providing the enhanced hydrophobicity to the spectacle lens not due to the structure of the structured coating. However, the structure of the structured coating on the surface of the spectacle lens may further enhance the hydrophobicity of the spectacle lens compared to a hydrophobicity of said spectacle lens without said structured coating or compared to a hydrophobicity of said spectacle lens comprising said coating without said structure. Thus, the structured coating on the surface of the spectacle lens is providing the enhanced hydrophobicity to the spectacle lens not only due to the structure of the structured coating. The coating material on the surface of the spectacle lens is selected such that a resulting coating on the surface of the spectacle lens is providing the enhanced hydrophobicity to the spectacle lens compared to a hydrophobicity of said spectacle lens without said coating. In other words, the coating material on the surface of the spectacle lens is selected such that after curing said coating material a respective coating on the surface of the spectacle lens is providing the enhanced hydrophobicity to the spectacle lens, compared to a hydrophobicity of said spectacle lens without said coating. Preferably, the coating or the structured coating is providing the enhanced hydrophobicity to the spectacle lens, compared

to a hydrophobicity of said spectacle lens without said coating or without said structured coating, when a water static contact angle of the spectacle lens comprising said coating or said structured coating is equal to or greater than a water static contact angle of a spectacle lens coated with a hydrophobic coating or a clean coating. Preferably, the coating or the structured coating is providing the enhanced hydrophobicity to the spectacle lens, compared to a hydrophobicity of said spectacle lens without said coating or without said structured coating, when the water static contact angle of the spectacle lens comprising said coating or said structured coating is equal to or greater than at least one of the following water static contact angles:

(i) the water static contact angle being equal to or greater than 110°,
(ii) the water static contact angle being equal to or greater than 115°,
(iii) the water static contact angle being equal to or greater than 120°,
(iv) the water static contact angle being equal to or greater than 125°.

The coating is providing the enhanced hydrophobicity to the spectacle lens irrespective of said coating being structured or not being structured, compared to a hydrophobicity of said spectacle lens without said coating or without said structured coating. The structured coating is providing the enhanced hydrophobicity to the spectacle lens, compared to a hydrophobicity of said spectacle lens without said coating or without said structured coating, when the water static contact angle of the spectacle lens comprising the structured coating is equal or greater than at least one of the before mentioned water static contact angles.

The water static contact angle of the spectacle lens comprising the coating or the structured coating preferably is measured by using the Easydrop contact angle measuring system, company Krüss GmbH.

The coating material resulting in the coating is "providing an enhanced abrasion resistance" to the spectacle lens when said coating is behaving as a hard coating, the hard coating defined as in ISO 13666:2019(E), entry 3.18.2, as a coating on the surface of the (organic) spectacle lens (3.5.2) intended to enhance the abrasion resistance of the surface during normal use. The coating on the surface of the spectacle lens is providing the enhanced abrasion resistance to the spectacle lens when said coating on said surface of the spectacle lens is acting as hard coating of the spectacle lens. The coating on the spectacle lens is providing the enhanced abrasion resistance to the spectacle lens irrespective of said coating being structured or said coating not being structured, compared to an abrasion resistance of said spectacle lens without said coating. In other words, the structured coating on the surface of the spectacle lens is providing the enhanced abrasion resistance to the spectacle lens not due to the structure of the structured coating, the enhanced abrasion resistance compared to an abrasion resistance of said spectacle lens without said coating. The coating material on the surface of the spectacle lens is selected such that a resulting coating on the surface of the spectacle lens is providing the enhanced abrasion resistance to the spectacle lens compared to an abrasion resistance of said spectacle lens without said coating. In other words, the coating material on the surface of the spectacle lens is selected such that after curing said coating material a respective coating on the surface of the spectacle lens is providing the enhanced abrasion resistance to the spectacle lens, compared to an abrasion resistance of said spectacle lens without said coating. Preferably, the coating or the structured coating is providing the enhanced abrasion resistance to the spectacle lens, compared to an abrasion resistance of said spectacle lens without said coating or without said structured coating, when a Bayer ratio of the spectacle lens comprising the coating or the structured coating is equal to or greater than a Bayer ratio of said spectacle lens coated with a hard coating. Preferably, the coating or the structured coating is providing the enhanced abrasion resistance to the spectacle lens, compared to an abrasion resistance of said spectacle lens without said coating or without said structured coating, when the Bayer ratio of the spectacle lens comprising the coating or the structured coating is equal to or greater than at least one of the following Bayer ratios:

(i) the Bayer ratio being equal to or greater than 3,
(ii) the Bayer ratio being equal to or greater than 3.5,
(iii) the Bayer ratio being equal to or greater than 4,
(iv) the Bayer ratio being equal to or greater than 4.5.

The coating is providing the enhanced abrasion resistance to the spectacle lens irrespective of said coating being structured or said coating not being structured, compared to an abrasion resistance of said spectacle lens without said coating or without said structured coating. The structured coating is providing the enhanced abrasion resistance to the spectacle lens, compared to an abrasion resistance of said spectacle lens without said coating or without said structured coating, when the Bayer ratio of the spectacle lens comprising the structured coating is equal or greater than at least one of the before mentioned Bayer ratios.

The Bayer ratio of the spectacle lens comprising the coating or the structured coating is determined as a difference in haze of a reference spectacle lens divided by a difference in haze of the spectacle lens comprising the coating or the structured coating. The reference spectacle lens has a refractive index of 1.5. The Bayer ratio of the spectacle lens

without the coating or without the structured coating is determined as a difference in haze of a reference spectacle lens divided by a difference in haze of the spectacle lens without the coating or without the structured coating.

The haze of the spectacle lens comprising the coating or the structured coating and the spectacle lens without coating each preferably is measured with the hazemeter haze-gard plus, company BYK-Gardner GmbH.

By enhancing the hydrophobicity compared to a hydrophobicity of said spectacle lens without said structured coating, by reducing the light reflection compared to a light reflection of said spectacle lens without said structured coating and by enhancing the abrasion resistance of the spectacle lens compared to an abrasion resistance of said spectacle lens without said structured coating, the structured coating provides, either by i) the structure of the coating or ii) the coating, or by iii) the structure of the coating and by the coating, properties to the spectacle lens for which a spectacle lens typically comprises three different surface layers: 1a) a clean coating as defined in ISO 13666:2019(E), entry 3.18.4, or 1b) a hydrophobic coating as defined in ISO 13666:2019(E), entry 3.18.5, for enhancing the hydrophobicity of the spectacle lens, 2) an anti-reflective coating as defined in ISO 13666:2019(E), entry 3.18.3, for reducing the light reflection of the spectacle lens and 3) a hard coating as defined in ISO 13666:2019(E), entry 3.18.2, for enhancing the abrasion resistance of the spectacle lens.

When comparing the hydrophobicity, preferably by comparing the water static contact angles, the light reflection, preferably by comparing the luminous reflectance, and the abrasion resistance, preferably by comparing the Bayer ratios, of the spectacle lens comprising the structured coating with the hydrophobicity, the light reflection and the abrasion resistance of said spectacle lens without the structured coating, preferably the surface(s) of the spectacle lens comprising the structured coating(s) is/are compared to a respective surface or respective surfaces of the spectacle lens without the structured coating. In other words, when the front surface of the spectacle lens comprises the structured coating, the hydrophobicity and the abrasion resistance of the spectacle lens are determined for the front surface of the spectacle lens and compared to a respective property of the front surface of said spectacle lens without the structured coating. When the front surface of the spectacle lens comprises the structured coating, preferably the luminous reflectance is for the spectacle lens coated on a single surface and compared to the luminous reflectance of said spectacle lens without the structured coating or compared to the luminous reflectance of said spectacle lens with said coating but without said structure. When the front surface and the back surface of the spectacle lens both comprise the structured coating, a) the hydrophobicity and the abrasion resistance are determined for the front surface of the spectacle lens and compared to the respective property of the front surface of the respective spectacle lens without the structured coating and b) the hydrophobicity and the abrasion resistance are determined for the back surface of the spectacle lens and compared to the respective property of the back surface of the respective spectacle lens without the structured coating. When the front surface and the back surface of the spectacle lens both comprise the structured coating, preferably the luminous reflectance is for the spectacle lens coated on both the front and the back surface and compared to the luminous reflectance of said spectacle lens without the structured coating or compared to the luminous reflectance of said spectacle lens with said coating on the front and back surface but said coating being without said structure. For comparison the respective spectacle lenses with and without the structured coating are based on the identical optical material. In case of a precoated spectacle lens comprising the structured coating, the respective precoated spectacle lenses with and without the structured coating are compared to each other.

In contrast to WO 2017/025128 A1, disclosing an uncoated nanotextured surface being an anti-reflective nanotextured surface and being based on a hydrophobic material, the structured coating described here provides not only the enhanced hydrophobicity and the reduced light reflection to the spectacle lens, but additionally the enhanced abrasion resistance, compared to a hydrophobicity, a light reflection and an abrasion resistance of said spectacle lens without said structured coating. This in turn means that not only two different surface layers, i.e., 1a) the clean coating or 1b) the hydrophobic coating and 2) the anti-reflective coating as in WO 2017/025128 A1 are replaceable by the structured coating but also the hard coating, i.e., in sum three different surface layers are replaceable by the structured coating of the spectacle lens.

Compared to the study of the mechanical behaviour in US 2018/0229420 A1, paragraphs [0169] and [0170], the Bayer test imposes much more harsh conditions to the structured coating or the coating on the lens surface. For testing the mechanical behaviour in US 2018/0229420 A1, paragraphs [0169] and [0170] conditions are simulated that are close to real wiping conditions for cleaning an ophthalmic lens with a fabric. However, the particles that are used for abrasion in the Bayer test are aluminium oxide based sharp particles that are made for ensuring the quality of spectacle lenses in a reproducible way by subjecting the spectacle lens to conditions that are meant to destroy the spectacle lens whereas the fabric used in US 2018/0229420 A1 is for gentle cleaning in daily life.

Preferably, the method for manufacturing the spectacle lens comprises the step of

- curing the structured coating material on the surface of the spectacle lens, said structured coating material resulting in the structured coating on said surface of said spectacle lens,

the structure of said structured coating providing the reduced light reflection to said spectacle lens, said structured

coating material being the coating material, said coating material resulting in the coating providing the enhanced hydrophobicity to said spectacle lens, irrespective of said structure of said structured coating,
and the method is characterized in that

- said coating material comprises a surfactant.

A "surfactant" is defined analogously as in note 1 to entry 3.6 of ISO 4618:2023(E) as an additive that has a fundamental property of reducing an interfacial tension between a i) solid and liquid or ii) a liquid and air or iii) a solid and air. Preferably, the surfactant is a fluorine-free surfactant.

A spontaneous enthalpy-driven migration of the surfactant to the surface of the coating material, the coating material being on the surface of the spectacle lens, is assumed to reduce an interfacial tension between the resulting coating on said surface of the spectacle lens and air. The reduced interfacial tension between the coating and air, compared to an interfacial tension between a coating and air, the latter coating resulting from said coating material without surfactant, allows the coating material on the surface of the spectacle lens being fluorine-free and nevertheless resulting after curing in the coating on the surface of the spectacle lens providing the enhanced hydrophobicity to the spectacle lens, compared to a hydrophobicity of said spectacle lens without said coating. Immediately after applying the coating material to the surface of the spectacle lens, the surfactant migrates to the surface of the coating material, i.e., to an interface of said coating material to air. The spontaneous and immediate migration of the surfactant to the surface of the coating material is assumed to reduce an interfacial tension between the coating material and air, compared to an interfacial tension between said coating material without surfactant and air. For comparison, the composition of the coating material with surfactant and the composition of the coating material without surfactant, is apart from the surfactant substantially same. The reduced interfacial tension between the coating material and air is maintained while structuring said coating material. After curing the structured coating material on the surface of the spectacle lens, the resulting structured coating on the surface of the spectacle lens maintains the reduced interfacial tension between the structured coating material and air and thus the resulting structured coating on the surface of the spectacle lens has said reduced interfacial tension between the structured coating and air. The interfacial tension between the coating material and air, the coating material being on the surface of the spectacle lens, is reduced that much and maintained in the resulting coating on said surface of the spectacle lens that said coating provides an enhanced hydrophobicity to the spectacle lens, compared to a hydrophobicity of said spectacle lens without said coating or even compared to a hydrophobicity of a spectacle lens coated with a respective coating but without said surfactant. As explained before, the structure of the coating material on the surface of the spectacle lens or of the resulting coating on said surface of the spectacle lens may contribute to further enhance the hydrophobicity of the spectacle lens. Maintaining the reduced interfacial tension between the coating material and air, the coating material being on the surface of the spectacle lens, in the resulting coating on said surface of the spectacle lens, preferably makes an addition of, for example, fluorinated surfactants, typically used and known to enhance hydrophobicity, in the composition of the coating material redundant. Also, a surface post-treatment, for example, the surface post-treatment with fluorine plasma to impact hydrophobicity, is preferably avoided and not necessary. In contrast to WO 2017/025128 A1, disclosing on page 5, lines 4 to 6, that the material of the nanotextured surface is a hydrophobic material, for example a fluorinated material, or disclosing on page 11, lines 29 to 31, that the nanostructured surface can be made of low surface energy hydrophobic material such as fluorinated resins or fluorinated polymers, the coating material comprising the surfactant described herein preferably is fluorine-free but nevertheless the resulting coating described herein provides enough hydrophobicity to the spectacle lens to make a hydrophobic coating or a clean coating redundant. Also, in contrast to WO 01/51220 A2, page 15, lines 15 to 31, suggesting using organically modified inorganic polycondensates or precursors thereof which contain, at least in part, organic radicals substituted by fluorine in a coating material to confer to a resulting coating additionally hydrophobic and oleophobic properties, the composition of the coating material or the coating material described herein preferably is fluorine-free but nevertheless due to maintaining the reduced interfacial tension in the resulting coating to air, as described before, hydrophobic properties are provided to the spectacle lens.

Preferably, the coating material comprises the surfactant that shows the spontaneous enthalpy-driven migration to the surface of the coating material and that, after curing, is covalently attached to a network of the resulting coating, for example, a siloxane-epoxide network of said coating. Therefore, the surfactant preferably reflects a functionality of the network of said coating, for example an epoxy functionality. This has the additional benefit that the coating material comprising such a surfactant results in the coating that provides the enhanced hydrophobicity to the spectacle lens simultaneously avoids that the surfactant is wiped off from the surface of the coating, for example, by cleaning the spectacle lens. Thus, the enhanced hydrophobicity is a permanent property and not a temporary one.

Preferably, as surfactant, the coating material comprises a siloxane-based surfactant, preferably a siloxane-based epoxide functionalized surfactant. Examples for such siloxane-based epoxide functionalized surfactants are: (epoxypropoxypropyl)dimethoxysilyl terminated polydimethylsiloxane, (molecular weight: 3500-4000 g/mol), mono-(2,3-epoxy)propylether terminated polydimethylsiloxane (molecular weight: 5000 g/mol), [8-10% (epoxycyclohexylethyl)

methylsiloxane]-dimethylsiloxane copolymer (molecular weight: 10000-12000 g/mol), [2-3% (epoxycyclohexylethyl) methylsiloxane]-dimethylsiloxane copolymer (molecular weight: 18000-20000 g/mol), epoxycyclohexylethyl terminated polydimethylsiloxane (molecular weight: 3000 g/mol). Preferably, as surfactant, the coating material comprises the siloxane-based epoxide functionalized surfactant selected from at least one of the group consisting of [8-10% (epoxycyclohexylethyl) methylsiloxane]-dimethylsiloxane copolymer (molecular weight: 10000-12000 g/mol), [2-3% (epoxycyclohexylethyl)methylsiloxane]-dimethylsiloxane copolymer (molecular weight: 18000-20000 g/mol), and epoxycyclohexylethyl terminated polydimethylsiloxane (molecular weight: 3000 g/mol). Further preferably, as surfactant, the coating material comprises the siloxane-based epoxide functionalized surfactant selected from at least one of the group consisting of [8-10% (epoxycyclohexylethyl) methylsiloxane]-dimethylsiloxane copolymer (molecular weight: 10000-12000 g/mol) and epoxycyclohexylethyl terminated polydimethylsiloxane (molecular weight: 3000 g/mol).

Preferably, the method for manufacturing the spectacle lens comprises the step of

- curing the structured coating material on the surface of the spectacle lens, said structured coating material resulting in the structured coating on said surface of said spectacle lens,

  the structure of said structured coating providing the reduced light reflection to said spectacle lens, said structured coating material being the coating material, said coating material resulting in the coating providing the enhanced hydrophobicity to said spectacle lens, irrespective of said structure of said structured coating,
  and the method is characterized in that

- said coating material comprises the surfactant in one of the following ranges:

  A) a range of 0.1 percent by weight to 1.5 percent by weight,
  B) a range of 0.2 percent by weight to 1.4 percent by weight,
  C) a range of 0.3 percent by weight to 1.3 percent by weight,
  D) a range of 0.4 percent by weight to 1.2 percent by weight,

  each based on the total weight of the coating material.

Preferably, the coating material comprises the surfactant, preferably the siloxane-based surfactant, further preferably the siloxane-based epoxide functionalized surfactant, in one of the following ranges: a range of 0.1 percent by weight to 1.5 percent by weight, a range of 0.2 percent by weight to 1.4 percent by weight, a range of 0.3 percent by weight to 1.3 percent by weight, a range of 0.4 percent by weight to 1.2 percent by weight, each based on the total weight of the coating material. Preferably, the coating material comprises the siloxane-based epoxide functionalized surfactant selected from at least one of the group consisting of [8-10% (epoxycyclohexylethyl) methylsiloxane]-dimethylsiloxane copolymer (molecular weight: 10000-12000 g/mol), [2-3% (epoxycyclohexylethyl)methylsiloxane]-dimethylsiloxane copolymer (molecular weight: 18000-20000 g/mol), and epoxycyclohexylethyl terminated polydimethylsiloxane (molecular weight: 3000 g/mol), preferably selected from at least one of the group consisting of [8-10% (epoxycyclohexylethyl) methylsiloxane]-dimethylsiloxane copolymer (molecular weight: 10000-12000 g/mol) and epoxycyclohexylethyl terminated polydimethylsiloxane (molecular weight: 3000 g/mol), in one of the following ranges: a range of 0.1 percent by weight to 1.5 percent by weight, a range of 0.2 percent by weight to 1.4 percent by weight, a range of 0.3 percent by weight to 1.3 percent by weight, a range of 0.4 percent by weight to 1.2 percent by weight, each based on the total weight of the coating material.

The coating material comprising less than 0.1 percent by weight, based on the total weight of the coating material, of the surfactant, results in a coating that is not able to replace in a spectacle lens comprising said coating a hydrophobic coating or a clean coating. The coating material comprising more than 1.2 percent by weight, based on the total weight of the coating material, of the surfactant, does not enhance the hydrophobicity of the spectacle lens comprising said coating any further. Furthermore, the coating material comprising more than 1.2 percent by weight, based on the total weight of the coating material, of the surfactant, has an undesirable side effect on another property, the abrasion resistance, of the spectacle lens comprising said coating.

Preferably, the method for manufacturing the spectacle lens comprises the step of

- curing the structured coating material on the surface of the spectacle lens, said structured coating material resulting in the structured coating on said surface of said spectacle lens,

  the structure of said structured coating providing the reduced light reflection to said spectacle lens, said structured coating material being the coating material, said coating material resulting in the coating providing the enhanced hydrophobicity to said spectacle lens, irrespective of said structure of said structured coating,

and the method is characterized in that

- said coating material comprises i) a hydrolysed organosilane, the organosilane being selected from at least one the group consisting of (3-glycidyloxypropyl)trimethoxysilane, (3-glycidyloxypropyl)-triethoxysilane and 2-(3,4-epoxycyclohexyl) ethyl trimethoxysilane, and ii) an epoxide,
in at least one of the following percent by weight ratios:

  A) said epoxide being 7 to 11 percent by weight of said hydrolysed organosilane,
  B) said epoxide being 8 to 10 percent by weight of said hydrolysed organosilane.

Said percent by weight ratio only refers to a percent by weight ratio between hydrolysed organosilane and the epoxide in said coating material. Other ingredients in the coating material are not considered by said percent by weight ratio.

The organosilane being selected from at least one of the group consisting of (3-glycidyloxypropyl)-trimethoxysilane, (3-glycidyloxypropyl)triethoxysilane and 2-(3,4-epoxycyclohexyl) ethyl trimethoxysilane is preferably easily hydrolysable, for example in presence of an acid, and efficiently curable, preferably UV curable and thermal curable. A coating material consisting of the hydrolysed organosilane, the organosilane being selected from at least one of the group consisting of (3-glycidyl-oxypropyl)trimethoxysilane, (3-glycidyloxypropyl)triethoxysilane and 2-(3,4-epoxycyclohexyl) ethyl trimethoxysilane preferably results on the surface of a spectacle lens, after curing, in a coating that shows no cracking and that has a good adhesion to said surface of the spectacle lens. Due to a stable siloxane network that is formed, after curing, from the coating material consisting of said hydrolysed organosilane, the resulting respective coating on said surface of the spectacle lens provides an enhanced abrasion resistance to said spectacle lens compared to an abrasion resistance of said spectacle lens without said coating. To accelerate curing of the coating material consisting of said hydrolysed organosilane, in particular UV curing, an epoxide, preferably a UV curable epoxide that is miscible with said hydroylsed organosilane is added to said coating material. Preferably, along with said UV curable epoxide a photoinitiator is added to said coating material.

Additionally, as the coating material on the surface of the spectacle lens is structured, it is of importance that the structure is maintained in the resulting structured coating on said surface of the spectacle lens. This preferably is ensured by a rapid curing, preferably UV curing, of the coating material. For example, in case the coating material on the surface of the spectacle lens is structured by an imprinting step, for example by nanoimprint lithography or UV nanoimprint lithography, a rapid curing of the structured coating material is preferred for a high replication fidelity. However, not to compromise the abrasion resistance that is achievable by the coating of the spectacle lens, said coating being based on said coating material consisting of the hydrolysable organosilane, by adding the epoxide, preferably the UV curable epoxide, to said coating composition, the percent by weight ratio between said hydrolysed organosilane and said epoxide, preferably said UV curable epoxide, in said coating material preferably is well balanced. Such a well balance preferably is achieved by the hydrolysed organosilane and the epoxide, preferably said UV curable epoxide, in said coating material being in one of the before mentioned percent by weight ratios, preferably in at least one of the following percent by weight ratios:

A) said epoxide being 11 percent by weight of said hydrolysed organosilane,
B) said epoxide being 10.5 percent by weight of said hydrolysed organosilane,
C) said epoxide being 10 percent by weight of said hydrolysed organosilane,
D) said epoxide being 9.5 percent by weight of said hydrolysed organosilane,
E) said epoxide being 9 percent by weight of said hydrolysed organosilane,
F) said epoxide being 8.5 percent by weight of said hydrolysed organosilane,
G) said epoxide being 8 percent by weight of said hydrolysed organosilane,
H) said epoxide being 7.5 percent by weight of said hydrolysed organosilane.

Again, said percent by weight ratio reflects the percent by weight ratio between the hydrolysed organosilane and the epoxide in said coating material and does not consider any other ingredients comprised in said coating composition.

The before mentioned percent by weight ratio between the hydrolysed organosilane and the epoxide preferably is maintained when the hydrolysed organosilane is partially replaced by, for example, silica nanoparticles.

Preferably, the coating material comprises the photoinitiator in one of the following ranges, a range of 1 percent by weight to 5 percent by weight, a range of 2 percent by weight to 4 percent by weight, a range of 2.5 percent by weight to 3.5 percent by weight, each based on the total weight of the coating material.

Preferably, the coating material comprises as photoinitiator triarylsulfonium hexafluoroantimonate salts, mixed, preferably in one of the before mentioned ranges.

Preferably, the method for manufacturing the spectacle lens comprises the step of

- curing the structured coating material on the surface of the spectacle lens, said structured coating material resulting in the structured coating on said surface of said spectacle lens,

the structure of said structured coating providing the reduced light reflection to said spectacle lens, said structured coating material being the coating material, said coating material resulting in the coating providing the enhanced hydrophobicity to said spectacle lens, irrespective of said structure of said structured coating,
and the method is characterized in that said coating material comprises i) the hydrolysed organosilane, the organosilane being selected from at least one the group consisting of (3-glycidyloxypropyl)trimethoxysilane, (3-glycidyloxypropyl)triethoxysilane and 2-(3,4-epoxycyclohexyl) ethyl trimethoxysilane, and ii) the epoxide, said epoxide being a UV curable epoxide, that is miscible with said hydrolysed organosilane and that has a viscosity in a range of 180 to 450 mPas at 25°C, in at least one of the following percent by weight ratios:

A) said epoxide being 7 to 11 percent by weight of said hydrolysed organosilane,
B) said epoxide being 8 to 10 percent by weight of said hydrolysed organosilane,

said coating material resulting in said coating providing the enhanced abrasion resistance to said spectacle lens, irrespective of said structure of said structured coating.

Reference is made to the before given description and explanation.
Preferably, the method for manufacturing the spectacle lens comprises the step of

- curing the structured coating material on the surface of the spectacle lens, said structured coating material resulting in the structured coating on said surface of said spectacle lens,

the structure of said structured coating providing the reduced light reflection to said spectacle lens, said structured coating material being the coating material, said coating material resulting in the coating providing the enhanced hydrophobicity to said spectacle lens, irrespective of said structure of said structured coating,
and the method is characterized in that said coating material comprises i) the hydrolysed organosilane, the organosilane being (3-glycidyloxypropyl)trimethoxysilane, and ii) the epoxide, said epoxide being the UV curable epoxide that is miscible with said hydrolysed organosilane and that has the viscosity in the range of 180 to 450 mPas at 25°C, in at least one of the following percent by weight ratios:

A) said epoxide being 7 to 11 percent by weight of said hydrolysed organosilane,
B) said epoxide being 8 to 10 percent by weight of said hydrolysed organosilane.

As explained before, not to compromise the enhanced abrasion resistance that is conferred to the spectacle lens by the coating in comparison to said spectacle lens without said coating, irrespective of said coating being structured or not, said coating being based on the coating material comprising the hydrolysed organosilane, but to simultaneously rapidly cure said coating material on the surface of the spectacle lens, the percent by weight ratio between the hydrolysed organosilane and the epoxide preferably needs to be well balanced in the coating composition and preferably comprises one of the before mentioned percent by weight ratios, thereby not considering any further ingredients of the coating material. Also, in case the hydrolysed organosilane is partially replaced by nanoparticles, for example silica nanoparticles, the well-balanced percent by weight ratio between a) the hydrolysed organosilane and the nanoparticles on the one hand side and b) the epoxide on the other hand side preferably is kept in one of the before mentioned percent by weight ratios. A rapid curing of the coating material on the surface of the spectacle lens is also preferred with respect to maintain the structure of the coating material in the coating. For example, when using nanoimprint lithography or UV nanoimprint lithography for structuring and curing said coating material on the surface of the spectacle lens, a not completely cured coating material may stick to a negative master while removing said negative master, thereby destroying the structure of the resulting coating.
Preferably, the epoxide added to the hydrolysed organosilane is UV curable to ensure a rapid curing of the coating material on the surface of the spectacle lens. From a procedural point of view, the epoxide comprised in said coating composition preferably is miscible with the hydrolysed organosilane to result in a homogenous mixture avoiding any phase separation. It has been found that both criteria, UV cure and miscibility, are met by an epoxide having a viscosity in a range of 180 to 450 mPas at 25°C, for example, 3,4-epoxycyclohexylmethyl-3,4-epoxycyclohexane-carboxylate.
Preferably, the method for manufacturing the spectacle lens comprises the step of

- curing the structured coating material on the surface of the spectacle lens, said structured coating material resulting in the structured coating on said surface of said spectacle lens,

the structure of said structured coating providing the reduced light reflection to said spectacle lens, said structured coating material being the coating material, said coating material resulting in the coating providing the enhanced hydrophobicity to said spectacle lens, irrespective of said structure of said structured coating,
and the method is characterized in that said coating material comprises i) the hydrolysed organosilane, the organosilane being (3-glycidyloxypropyl)trimethoxysilane, and ii) the epoxide, said epoxide being 3,4-epoxycyclohexylmethyl-3,4-epoxycyclohexane-carboxylate, in at least one of the following percent by weight ratios:

A) said epoxide being 7 to 11 percent by weight of said hydrolysed organosilane,
B) said epoxide being 8 to 10 percent by weight of said hydrolysed organosilane,

said coating material resulting in said coating providing the enhanced abrasion resistance to said spectacle lens, irrespective of said structure of said structured coating.

Reference is made to the before given description and explanation.
Preferably, the method for manufacturing the spectacle lens comprises the step of

- curing the structured coating material on the surface of the spectacle lens, said structured coating material resulting in the structured coating on said surface of said spectacle lens,

the structure of said structured coating providing the reduced light reflection to said spectacle lens, said structured coating material being the coating material, said coating material resulting in the coating providing the enhanced hydrophobicity to said spectacle lens, irrespective of said structure of said structured coating,
and the method is characterized in that said coating material comprises said hydrolysed (3-glycidyloxypropyl) trimethoxysilane, said 3,4-epoxycyclohexylmethyl-3,4-epoxycyclohexanecarboxylate, in a percent by weight ratio that is selected from at least one of the following percent by weight ratios:

A) said 3,4-epoxycyclohexylmethyl-3,4-epoxycyclohexane-carboxylate being 11 percent by weight of said hydrolysed (3-glycidyloxypropyl)trimethoxysilane,
B) said 3,4-epoxycyclohexylmethyl-3,4-epoxycyclohexane-carboxylate being 10.5 percent by weight of said hydrolysed (3-glycidyloxypropyl)trimethoxysilane,
C) said 3,4-epoxycyclohexylmethyl-3,4-epoxycyclohexane-carboxylate being 10 percent by weight of said hydrolysed (3-glycidyloxypropyl)trimethoxysilane,
D) said 3,4-epoxycyclohexylmethyl-3,4-epoxycyclohexane-carboxylate being 9.5 percent by weight of said hydrolysed (3-glycidyloxypropyl)trimethoxysilane,
E) said 3,4-epoxycyclohexylmethyl-3,4-epoxycyclohexane-carboxylate being 9 percent by weight of said hydrolysed (3-glycidyloxypropyl)trimethoxysilane,
F) said 3,4-epoxycyclohexylmethyl-3,4-epoxycyclohexane-carboxylate being 8.5 percent by weight of said hydrolysed (3-glycidyloxypropyl)trimethoxysilane,
G) said 3,4-epoxycyclohexylmethyl-3,4-epoxycyclohexane-carboxylate being 8 percent by weight of said hydrolysed (3-glycidyloxypropyl)trimethoxysilane,
H) said 3,4-epoxycyclohexylmethyl-3,4-epoxycyclohexane-carboxylate being 7.5 percent by weight of said hydrolysed (3-glycidyloxypropyl)trimethoxysilane.

Again, the percent by weight ratio considers hydrolysed (3-glycidyloxypropyl)trimethoxysilane and 3,4-epoxycyclohexylmethyl-3,4-epoxycyclohexane-carboxylate only, no further ingredients of the coating material is taken into consideration by said percent by weight ratio.
As explained before, preferably the coating composition comprises the organosilane that is easily hydrolysable, rapidly curable, preferably both UV and thermally curable, to result in a respective coating on the surface of the spectacle showing no cosmetic defects such as cracks and having a good adhesion to the surface of the spectacle lens. The before mentioned characteristics are fulfilled by (3-glycidyloxypropyl)trimethoxysilane or hydrolysed (3-glycidyloxypropyl)trimethoxysilane. As further explained before, to accelerate curing without compromising or with compromising in an acceptable manner the abrasion resistance of the spectacle lens comprising said coating in comparison to said spectacle lens without said coating, the UV curable epoxide that is miscible with the hydrolysed (3-glycidyloxypropyl)trimethoxysilane and that has a viscosity in a range of 180 to 450 mPas at 25°C is combined with the hydrolysed (3-glycidyloxypropyl)trimethoxysilane. The UV curable epoxide that fulfils the before mentioned characteristics is, for example, 3,4-epoxycyclohexylmethyl-3,4-epoxycyclohexane-carboxylate.
Preferably, the method for manufacturing the spectacle lens comprises the step of

- curing the structured coating material on the surface of the spectacle lens, said structured coating material resulting in the structured coating on said surface of said spectacle lens,

  the structure of said structured coating providing the reduced light reflection to said spectacle lens, said structured coating material being the coating material, said coating material resulting in the coating providing the enhanced hydrophobicity to said spectacle lens, irrespective of said structure of said structured coating,
  and the method is characterized in that the structure of the structured coating is selected such that said structure provides an enhanced hydrophobicity to the spectacle lens compared to the hydrophobicity of said spectacle lens comprising said coating without said structure.

As explained above, the coating on the surface of the spectacle lens is providing the enhanced hydrophobicity to the spectacle lens compared to said spectacle lens without said coating, irrespective of said coating being structured or not. However, the structure of the structured coating preferably is selected such that the hydrophobicity of the spectacle lens comprising said structured coating is further enhanced compared to the already existing hydrophobicity of said spectacle lens comprising said coating without structure. The possibility to influence or to enhance the hydrophobicity of the spectacle lens by adapting the structure of the structured coating makes, on the one hand, adding of fluorine-containing ingredient to the coating material, and, on the other hand, the post-treatment with fluorine plasma, both known methods to enhance hydrophobicity of a coating, redundant.

Preferably, the method for manufacturing the spectacle lens comprises the step of

- curing the structured coating material on the surface of the spectacle lens, said structured coating material resulting in the structured coating on said surface of said spectacle lens,

  the structure of said structured coating providing the reduced light reflection to said spectacle lens, said structured coating material being the coating material, said coating material resulting in the coating providing the enhanced hydrophobicity to said spectacle lens, irrespective of said structure of said structured coating,
  and the method is characterized in the step of

- imprinting said coating material on the surface of the spectacle lens resulting in said structured coating material on the surface of the spectacle lens.

"Imprinting" the coating material on the surface of the spectacle lens means modifying a surface structure of the coating material. Imprinting the coating material on the surface of the spectacle lens results in the structured coating material on said surface of the spectacle lens. The coating material on the surface of the spectacle lens is imprinted such that, after curing said coating material, the structure of the resulting coating is providing the reduced light reflection to the spectacle lens. The coating material is imprinted such that the spectacle lens comprising the structured coating is having the reduced light reflection compared to said spectacle lens without said structured coating. Preferably, the spectacle lens comprises said structured coating as outermost surface layer, i.e., as surface layer furthest away from the surface of the spectacle lens the coating material was applied to. Preferably, the coating material on the surface of the spectacle lens is imprinted such that the structure of the resulting coating comprises arrays of protuberances, said protuberances having dimensions smaller than a wavelength of visible light incident upon them. Such light coupling and refractive index gradient sub-wavelength arrays of protuberances are capable of enhancing transmission of light through an interface between said structured coating and air without inducing scattering, thus reducing an amount of light reflected by said interface. A prominent example for the before described arrays of protuberances are moth-eye antireflective structures. Preferably, the coating material is imprinted such that the structure of the resulting coating is comprising at least one of i) random arrays of protuberances, for example random arrays of pillars, cones, paraboloids and ii) periodic arrays of protuberances, for example periodic arrays of pillars, cones, paraboloids. The coating material may be imprinted such that the structure of the resulting coating comprises either said random arrays only or said periodic arrays only. The coating material may be imprinted such that the structure of the resulting coating comprises one section or more sections with said random arrays. The coating material may be imprinted such that the structured coating comprises one section or more sections with said periodic arrays. Preferably, said protuberances are having a height in one of the following ranges: a height within a range of 100 nm to 600 nm, a height within a range of 150 nm to 550 nm, a height within a range of 200 nm to 500 nm, a height within a range of 200 nm to 450 nm. Preferably, an aspect ratio of said protuberances, i.e., a ratio of height to diameter of said structures, is in one of the following ranges: an aspect ratio within a range of 1 to 10, an aspect ratio within a range 1.2 to 9, an aspect ratio within a range of 1.5 to 7, an aspect ratio within a range of 1.8 to 5. Preferably, a pitch between the highest points of said protuberances is in one of the following ranges: a pitch within a range of 100 nm to 600 nm, a pitch within a range of 150 nm to 500 nm, a pitch within a range of 200 nm to 400 nm, a pitch within a range of 230 nm to 350 nm.

Preferably, the coating material is imprinted using a nanoimprint lithography process (NIL), further preferably a

UV-nanoimprint lithography process (UVNIL).

Preferably, in a previous step, the coating material is applied to the surface of the spectacle lens. Preferably, in a subsequent step, i.e., subsequently to the imprinting step, the structured coating material is cured.

Preferably, the method for manufacturing the spectacle lens comprises the step of

- curing the structured coating material on the surface of the spectacle lens, said structured coating material resulting in the structured coating on said surface of said spectacle lens,

the structure of said structured coating providing the reduced light reflection to said spectacle lens, said structured coating material being the coating material, said coating material resulting in the coating providing the enhanced hydrophobicity to said spectacle lens, irrespective of said structure of said structured coating,
and the method is characterized in that that curing said structured coating material is achieved by UV radiation.

Reference is made to the before given description.

The spectacle lens comprises a structured coating, a structure of said structured coating is providing a reduced light reflection to said spectacle lens compared to a light reflection of said spectacle lens without said structured coating, a structured coating material being a coating material, said coating material resulting in a coating providing an enhanced hydrophobicity to said spectacle lens compared to a hydrophobicity of said spectacle lens without said structured coating, the enhanced hydrophobicity being irrespective of said structure of said structured coating, the spectacle lens is characterized in that

- said coating material resulting in said coating provides an enhanced abrasion resistance to said spectacle lens compared to an abrasion resistance of said spectacle lens without said structured coating, the enhanced abrasion resistance being irrespective of said structure of said structured coating.

The spectacle lens comprises a structured coating, a structure of said structured coating providing a reduced light reflection to said spectacle lens compared to a light reflection of said spectacle lens without said structured coating, a structured coating material being a coating material, said coating material resulting in a coating providing an enhanced hydrophobicity to said spectacle lens compared to a hydrophobicity of said spectacle lens without said structured coating, the enhanced hydrophobicity being irrespective of said structure of said structured coating,

said coating material resulting in said coating providing an enhanced abrasion resistance to said spectacle lens compared to an abrasion resistance of said spectacle lens without said structured coating, the enhanced abrasion resistance being irrespective of said structure of said structured coating, characterized in that
the enhanced abrasion resistance compared to an abrasion resistance of said spectacle lens without said structured coating is expressed as a Bayer ratio selected from at least one of the following Bayer ratios:

(i) the Bayer ratio being equal to or greater than 3,
(ii) the Bayer ratio being equal to or greater than 3.5,
(iii) the Bayer ratio being equal to or greater than 4,
(iv) the Bayer ratio being equal to or greater than 4.5,

the Bayer ratio being determined as a difference in haze of a reference spectacle lens having a refractive index of 1.5 divided by a difference in haze of said spectacle lens comprising said coating or the Bayer ratio being determined as a difference in haze of a reference spectacle lens having a refractive index of 1.5 divided by a difference in haze of said spectacle lens without said coating, each difference in haze being determined as difference in haze after and before abrasion in presence of an abrasive medium.

The spectacle lens comprises a structured coating, a structure of said structured coating providing a reduced light reflection to said spectacle lens compared to a light reflection of said spectacle lens without said structured coating, a structured coating material being a coating material, said coating material resulting in a coating providing an enhanced hydrophobicity to said spectacle lens compared to a hydrophobicity of said spectacle lens without said structured coating, the enhanced hydrophobicity being irrespective of said structure of said structured coating,

said coating material resulting in said coating providing an enhanced abrasion resistance to said spectacle lens compared to an abrasion resistance of said spectacle lens without said structured coating, the enhanced abrasion resistance being irrespective of said structure of said structured coating, characterized in that
said coating material comprising hydrolysed (3-glycidyloxypropyl)trimethoxysilane and 3,4-epoxycyclohexyl-

methyl-3,4-epoxycyclohexane-carboxylate in that

A) 3,4-epoxycyclohexylmethyl-3,4-epoxycyclohexane-carboxylate is 7 to 11 percent by weight of hydrolysed (3-glycidyloxypropyl)trimethoxysilane, or
B) 3,4-epoxycyclohexylmethyl-3,4-epoxycyclohexane-carboxylate is 8 to 10 percent by weight of hydrolysed (3-glycidyloxypropyl)trimethoxysilane.

Reference with respect to the before-mentioned alternatives is made to the before given definitions and description.

Preferably, the spectacle lens comprises the structured coating, the structure of said structured coating is providing the reduced light reflection to said spectacle lens compared to the light reflection of said spectacle lens without said structured coating, said structured coating material being the coating material, said coating material resulting in the coating providing the enhanced hydrophobicity to said spectacle lens compared to the hydrophobicity of said spectacle lens without said structured coating, the enhanced hydrophobicity being irrespective of said structure of said structured coating, the spectacle lens is characterized in that

- said coating material comprises hydrolysed (3-glycidyloxypropyl)trimethoxysilane and 3,4-epoxycyclohexylmethyl-3,4-epoxycyclohexane-carboxylate, said coating material resulting in said coating providing the enhanced abrasion resistance to said spectacle lens compared to the abrasion resistance of said spectacle lens without said structured coating, the enhanced abrasion resistance being irrespective of said structure of said structured coating.

Reference is made to the before given description and explanations.

Preferably, the spectacle lens comprises the structured coating, the structure of said structured coating is providing the reduced light reflection to said spectacle lens compared to the light reflection of said spectacle lens without said structured coating, said structured coating material being the coating material, said coating material resulting in the coating providing the enhanced hydrophobicity to said spectacle lens compared to the hydrophobicity of said spectacle lens without said structured coating, the enhanced hydrophobicity being irrespective of said structure of said structured coating, the spectacle lens is characterized in that

- said coating material comprises hydrolysed (3-glycidyloxypropyl)trimethoxysilane and 3,4-epoxycyclohexylmethyl-3,4-epoxycyclohexane-carboxylate in that

A) 3,4-epoxycyclohexylmethyl-3,4-epoxycyclohexane-carboxylate is 7 to 11 percent by weight of hydrolysed (3-glycidyloxypropyl)trimethoxysilane, or
B) 3,4-epoxycyclohexylmethyl-3,4-epoxycyclohexane-carboxylate is 8 to 10 percent by weight of hydrolysed (3-glycidyloxypropyl)trimethoxysilane,

said coating material resulting in said coating providing the enhanced abrasion resistance to said spectacle lens compared to the abrasion resistance of said spectacle lens without said structured coating, the enhanced abrasion resistance being irrespective of said structure of said structured coating.

Reference is made to the before given description and explanations.

Preferably, the spectacle lens comprises the structured coating, the structure of said structured coating is providing the reduced light reflection to said spectacle lens compared to the light reflection of said spectacle lens without said structured coating, said structured coating material being the coating material, said coating material resulting in the coating providing the enhanced hydrophobicity to said spectacle lens compared to the hydrophobicity of said spectacle lens without said structured coating, the enhanced hydrophobicity being irrespective of said structure of said structured coating, the spectacle lens is characterized in that

- said coating material comprises hydrolysed (3-glycidyloxypropyl)trimethoxysilane and 3,4-epoxycyclohexylmethyl-3,4-epoxycyclohexane-carboxylate in that

A) 3,4-epoxycyclohexylmethyl-3,4-epoxycyclohexane-carboxylate being 11 percent by weight of hydrolysed (3-glycidyloxypropyl)trimethoxysilane, or
B) 3,4-epoxycyclohexylmethyl-3,4-epoxycyclohexane-carboxylate being 10.5 percent by weight of hydrolysed (3-glycidyloxypropyl)trimethoxysilane, or
C) 3,4-epoxycyclohexylmethyl-3,4-epoxycyclohexane-carboxylate being 10 percent by weight of hydrolysed (3-glycidyloxypropyl)trimethoxysilane, or

D) 3,4-epoxycyclohexylmethyl-3,4-epoxycyclohexane-carboxylate being 9.5 percent by weight of hydrolysed (3-glycidyloxypropyl)trimethoxysilane, or
E) 3,4-epoxycyclohexylmethyl-3,4-epoxycyclohexane-carboxylate being 9 percent by weight of hydrolysed (3-glycidyloxypropyl)trimethoxysilane, or
F) 3,4-epoxycyclohexylmethyl-3,4-epoxycyclohexane-carboxylate being 8.5 percent by weight of hydrolysed (3-glycidyloxypropyl)trimethoxysilane, or
G) 3,4-epoxycyclohexylmethyl-3,4-epoxycyclohexane-carboxylate being 8 percent by weight of hydrolysed (3-glycidyloxypropyl)trimethoxysilane, or
H) 3,4-epoxycyclohexylmethyl-3,4-epoxycyclohexane-carboxylate being 7.5 percent by weight of hydrolysed (3-glycidyloxypropyl)trimethoxysilane,

said coating material resulting in said coating providing the enhanced abrasion resistance to said spectacle lens compared to the abrasion resistance of said spectacle lens without said structured coating, the enhanced abrasion resistance being irrespective of said structure of said structured coating.

Preferably, the spectacle lens comprises the structured coating, the structure of said structured coating is providing the reduced light reflection to said spectacle lens, compared to the light reflection of said spectacle lens without said structured coating, said structured coating material being the coating material, said coating material resulting in the coating providing the enhanced hydrophobicity to said spectacle lens compared to the hydrophobicity of said spectacle lens without said structured coating, the enhanced hydrophobicity being irrespective of said structure of said structured coating, the spectacle lens is characterized in that

- said coating material comprises a surfactant, said coating material resulting in said coating providing the enhanced abrasion resistance to said spectacle lens compared to the abrasion resistance of said spectacle lens without said structured coating, the enhanced abrasion resistance being irrespective of said structure of said structured coating.

Reference is made to the before given definitions and description, in particular with respect to the surfactant.

Preferably, the spectacle lens comprises the structured coating, the structure of said structured coating is providing the reduced light reflection to said spectacle lens, compared to the light reflection of said spectacle lens without said structured coating, said structured coating material being the coating material, said coating material resulting in the coating providing the enhanced hydrophobicity to said spectacle lens compared to the hydrophobicity of said spectacle lens without said structured coating, the enhanced hydrophobicity being irrespective of said structure of said structured coating, the spectacle lens is characterized in that

- said coating material comprises the surfactant in at least one of the following ranges

  A) a range of 0.1 percent by weight to 1.5 percent by weight,
  B) a range of 0.2 percent by weight to 1.4 percent by weight,
  C) a range of 0.3 percent by weight to 1.3 percent by weight,
  D) a range of 0.4 percent by weight to 1.2 percent by weight,

  each based on the total weight of the coating material,
  said coating material resulting in said coating providing the enhanced abrasion resistance to said spectacle lens compared to the abrasion resistance of said spectacle lens without said structured coating, the enhanced abrasion resistance being irrespective of said structure of said structured coating.

Reference is made to the before given definitions and description.

Preferably, the spectacle lens comprises the structured coating, the structure of said structured coating is providing the reduced light reflection to said spectacle lens, compared to the light reflection of said spectacle lens without said structured coating, said structured coating material being the coating material, said coating material resulting in the coating providing the enhanced hydrophobicity to said spectacle lens compared to the hydrophobicity of said spectacle lens without said structured coating, the enhanced hydrophobicity being irrespective of said structure of said structured coating, the spectacle lens is characterized in that the reduced light reflection compared to a light reflection of said spectacle lens without said structured coating is expressed as a reduction of a luminous reflectance selected from at least one of the following reductions:

(i) the luminous reflectance being reduced by at least 2 percentage points,
(ii) the luminous reflectance being reduced by at least 2.5 percentage points,
(iii) the luminous reflectance being reduced by at least 3 percentage points,

(iv) the luminous reflectance being reduced by at least 3.5 percentage points.

Reference is made to the before given definitions and description.

Preferably, the spectacle lens comprises the structured coating, the structure of said structured coating is providing the reduced light reflection to said spectacle lens, compared to the light reflection of said spectacle lens without said structured coating, said structured coating material being the coating material, said coating material resulting in the coating providing the enhanced hydrophobicity to said spectacle lens compared to the hydrophobicity of said spectacle lens without said structured coating, the enhanced hydrophobicity being irrespective of said structure of said structured coating, the spectacle lens is characterized in that the enhanced hydrophobicity compared a hydrophobicity of said spectacle lens without said structured coating is expressed as a static water contact angle selected from at least one of the following static water contact angles:

(i) the water static contact angle being equal to or greater than 110°,
(ii) the water static contact angle being equal to or greater than 115°,
(iii) the water static contact angle being equal to or greater than 120°,
(iv) the water static contact angle being equal to or greater than 125°.

Reference is made to the before given definitions and description.

Preferably, the spectacle lens comprises the structured coating, the structure of said structured coating is providing the reduced light reflection to said spectacle lens, compared to the light reflection of said spectacle lens without said structured coating, said structured coating material being the coating material, said coating material resulting in the coating providing the enhanced hydrophobicity to said spectacle lens compared to the hydrophobicity of said spectacle lens without said structured coating, the enhanced hydrophobicity being irrespective of said structure of said structured coating, the spectacle lens is characterized in that the enhanced abrasion resistance compared to an abrasion resistance of said spectacle lens without said structured coating is expressed as a Bayer ratio selected from at least one of the following Bayer ratios:

(i) the Bayer ratio being equal to or greater than 3,
(ii) the Bayer ratio being equal to or greater than 3.5,
(iii) the Bayer ratio being equal to or greater than 4,
(iv) the Bayer ratio being equal to or greater than 4.5.

Reference is made to the before given definitions and description.

Preferably, the spectacle lens comprises the structured coating, the structure of said structured coating is providing the reduced light reflection to said spectacle lens, compared to the light reflection of said spectacle lens without said structured coating, said structured coating material being the coating material, said coating material resulting in the coating providing the enhanced hydrophobicity to said spectacle lens compared to the hydrophobicity of said spectacle lens without said structured coating, the enhanced hydrophobicity being irrespective of said structure of said structured coating, the spectacle lens is characterized in that that the structure of the structured coating is selected such that said structure provides an enhanced hydrophobicity to said spectacle lens compared to the hydrophobicity of said spectacle lens comprising said coating without said structure.

Reference is made to the before given definitions and description.

The data set comprising at least one of the following kinds of data: (i) data of the spectacle lens, said data being configured for the purpose of a use for a manufacture of the spectacle lens, and (ii) data containing computer-readable instructions for controlling one or more manufacturing machines to produce the spectacle lens.

Preferably, the data is computer-readable data. The data set or the data may be stored on a computer-readable medium, transferred via a data signal or being retrievable from a data network. The computer-readable medium may be a non-transitory tangible computer-readable storage medium. The use of the data of the spectacle lens for purposes other than the manufacture of the spectacle lens is excluded.

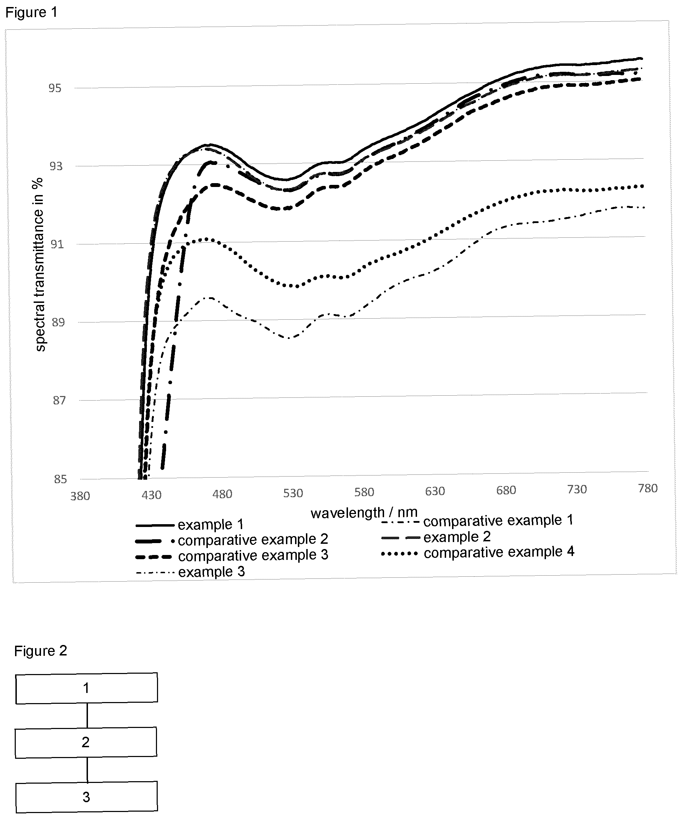

Figure 1: Spectral transmittance curves of the spectacle lenses according to the examples and comparative examples
Figure 2: 1 = step 1 applying the coating material to the surface of the spectacle lens, 2 = step 2 imprinting the coating material on the surface of the spectacle lens, 3 = step 3 curing the coating material on the surface of the spectacle lens

## I Manufacturing of the spectacle lenses

For all spectacle lenses according to the examples and comparative examples, if applicable:

Hydrolysis of (3-glycidyloxypropyl)trimethoxysilane (GPTS; company Merck KGaA)

- a solution of 10 g of GPTS and 2.284 g pH1 water was stirred with a magnetic stirrer at 50°C (1 hour, 300 rpm) and overnight stirred at room temperature (~18 hours, 300 rpm), the pH1 water was prepared by adding 2.519 g of 1N HCl into 24.7 g of deionized water,
- water and methanol were evaporated in a vacuum oven at 70°C and 310 mbar pressure for 2 hours. The evaporation of water and methanol was checked by gravimetrical analysis. For the solution of 10 g GPTS and 2.284 g pH1 water, 12.284 g of solution in total, a remaining solution was 9.8253 $\pm$ 0.11 g after evaporation of water and methanol.

Activation of clear plano spectacle lenses based on poly(allyl diglycol carbonate)

- the clear plano spectacle lenses were cleaned with acetone and a soft cloth, sonicated for 5 min in an ultrasonic bath (450 W) with 10 wt% NaOH solution at 50°C, sonicated for 5 min in an ultrasonic bath (450 W) with deionized water at 50°C,
- the clear plano spectacle lenses were dried at 60°C for 5 min.

Spin coating

- with a speed of 300 rpm for 30 sec and 3000 rpm for 1 min.

UV-nanoimprint lithography process (UVNIL)

- a negative UV transparent polydimethylsiloxane (PDMS) negative replica of a nanostructured master was prepared, the nanostructured master comprised nanopillars with a height of 350 nm, a pitch of 250 nm and an aspect ratio of ~3,
- the negative UV transparent PDMS replica was gently placed and pressed onto a respective spin coated spectacle lens,
- a resulting stack of the negative UV transparent PDMS replica and the respective spin coated spectacle lens was placed in an imprinting tool, a constant pressure of 1 bar was applied for 90 s and the stack was irradiated through the negative UV transparent PDMS replica using a 200 W highpressure mercury lamp (OmniCure S2000, company Lumen Dynamics Group Inc.) during 3 min under a light intensity of 120 mW/cm$^2$ while keeping the stack under the pressure of 1 bar,
- the respective spin coated spectacle lens was removed from the negative UV transparent PDMS replica.

**Example 1**

Preparation of hybrid solution

- 0.01 g [8-10% (epoxycyclohexylethyl)methylsiloxane]-dimethylsiloxane copolymer (PDMS-Sur, molecular weight: 10000-12000 g/mol; company Gelest Inc.), 0.03 g triarylsulfonium hexafluoroantimonate salts, mixed (TAS; company Merck KGaA), 0.065 g 3,4-epoxycyclohexylmethyl-3,4-epoxycyclohexane-carboxylate (epoxide; company Arkema) and 0.695 g hydrolyzed GPTS were stirred at room temperature until a homogeneous and slightly hazy solution was obtained (~1 hour, 300 rpm).

Dispersion of silica nanoparticles (silica NP; Aerosil 200, company Evonik Industries) in solvents

- 0.8 g isopropanol, 1.2 g 1-methoxy-2-propanol and 0.2 g silica NPs were pre-dispersed in a Vortex mixer for 1 min, the dispersion was sonicated for 10 min with 1 minute pause every 15 sec at 165 W in an ice bath.

The hybrid solution was added to the dispersion of silica nanoparticles. The resulting formulation was sonicated for 15 min with 1 minute of pause in every 15 sec at 165 W in an ice bath and filtered with a 450 nm pore size filter made of polyether sulfone.

The filtered formulation was spin coated onto the front surface of the activated spectacle lens, resulting in a coating thickness of 3 $\mu$m.

The resulting coated spectacle lens was pre-dried in an oven at 60°C for 30 sec, imprinted by the UVNIL process and thermally post cured at 110°C for 1 h to result in a coated spectacle lens comprising a nanostructured coating.

**Example 2**

Preparation of hybrid solution

- 0.025 g PDMS-Sur, 0.15 g TAS, 0.4125 g epoxide, 4.4125 g hydrolyzed GPTS were stirred at room temperature until a homogeneous and slightly hazy solution was obtained (~1 hour, 300 rpm).

The hybrid solution was spin coated onto the front surface activated spectacle lens, resulting in a coating thickness of 5 μm.

The resulting coated spectacle lens imprinted by the UVNIL process and thermally post cured at 110°C for 1 h to result in a coated spectacle lens comprising a nanostructured coating.

**Example 3**

Preparation of hybrid solution

- 0.03 g PDMS-Sur, 0.09 g TAS, 0.15 g epoxide, 1.53 g hydrolyzed GPTS were stirred at room temperature until a homogeneous and slightly hazy solution was obtained (~1 hour, 300 rpm).

Dispersion of silica nanoparticles in solvents

- 3.6 g of isopropanol, 5.4 g of 1-methoxy-2-propanol and 1.2 g silica NPs were pre-dispersed in a Vortex mixer for 1 min, the dispersion was sonicated for 10 min with 1 minute pause every 15 sec at 165 W in an ice bath.

The hybrid solution was added to the dispersion of silica nanoparticles. The resulting formulation was sonicated for 15 min with 1 minute of pause in every 15 sec at 165 W in an ice bath and filtered with a 450 nm pore size filter made of polyether sulfone.

The filtered formulation was spin coated onto the front surface activated spectacle lens, resulting in a coating thickness of 3.1 μm.

The resulting coated spectacle lens was pre-dried in an oven at 60°C for 30 sec, imprinted by the UVNIL process and thermally post cured at 110°C for 1 h to result in a coated spectacle lens comprising a nanostructured coating.

**Comparative example 1**

The coated spectacle lens was prepared analogously to the coated spectacle lens according to example 1 but not imprinted by the UVNIL process.

**Comparative example 2**

Hydrolysis of tetraethyl orthosilicate (TEOS; company Merck KGaA)

- a solution of 2 g TEOS, 0.3456 g pH1 water, 0.8842 g ethanol was stirred with a magnetic stirrer at 50°C (3 hours, 300 rpm), the pH1 water was prepared by adding 2.519 g of 1N HCl into 24.7 g of deionized water,
- water and ethanol were evaporated in a vacuum oven at 40°C and 100 mbar pressure for 30 min. The evaporation of water and ethanol was checked by gravimetrical analysis. For the solution of 2 g TEOS, 0.3456 g pH1 water, 0.8842 g ethanol, 3.23 g of solution in total, a remaining solution was 1.35 ± 0.05 g after evaporation of water and ethanol.

Preparation of hybrid solution

- 0.01 g PDMS-Sur, 0.15 g TAS, 3.84 g epoxide, 0.5 g hydrolyzed GPTS, 0.5 g hydrolyzed TEOS were stirred at room temperature until a homogeneous and slightly hazy solution was obtained (~1 hour, 300 rpm).

The organic solution was spin coated onto the activated spectacle lens, resulting in a coating thickness of 5.2 μm.

The resulting coated spectacle lens was imprinted by the UVNIL process and thermally post cured at 80°C for 4 h to result in a coated spectacle lens comprising a nanostructured coating.

**Comparative example 3**

Preparation of hybrid solution

- 0.15 g TAS, 0.425 g epoxide, 4.425 g hydrolyzed GPTS were stirred at room temperature until a homogeneous and slightly hazy solution was obtained (~1 hour, 300 rpm).

The hybrid solution was spin coated onto the activated spectacle lens, resulting in a coating thickness of 5.5 μm.
The resulting coated spectacle lens was imprinted by the UVNIL process and thermally post cured at 110°C for 1 h to result in a coated spectacle lens comprising a nanostructured coating.

**Comparative example 4**

Clear plano spectacle lens based on poly(allyl diglycol carbonate), uncoated.

Table 1: comparison of spectacle lenses according to the examples and the comparative examples

| example / comparative example | NP [wt%] | PDMS-Sur [wt%] | TAS [wt%] | epoxide [wt%] | hydrolyzed GPTS [wt%] | hydrolysed TEOS [wt%] | structured coating |
|---|---|---|---|---|---|---|---|
| example 1 | 20 | 1 | 3 | 6.5 | 69.5* | - | yes |
| example 2 | - | 0.5 | 3 | 8.25 | 88.25 | - | yes |
| example 3 | 40 | 1 | 3 | 5 | 51* | - | yes |
| comparative example 1 | 20 | 1 | 3 | 6.5 | 69.5* | - | no |
| comparative example 2 | - | 0.2 | 3 | 76.8 | 10 | 10 | yes |
| comparative example 3 | - | - | 3 | 8.5 | 88.5 | - | yes |
| * the presence of solvents were not taken into account | | | | | | | |

**II Characterization of the spectacle lenses**

II.1 Determination of water static contact angle

The water static contact angle of the coated spectacle lenses was measured at room temperature, with deionized water and a droplet volume of 2 μL with sessile drop mode by using the Easydrop contact angle measuring system, company Krüss GmbH. Three to five measurements were made for each coated spectacle lens and averaged after calculation via tangent method.

II.2 Determination of spectral transmittance

The spectral transmittance of the spectacle lenses according to the examples and of the spectacle lenses according to the comparative examples is measured at 0° angle of incidence by using a Lambda 950S instrument, company Perkin Elmer.
From the measured values of the spectral transmittance, the luminous transmittance is calculated following the formula of note 1 to entry 3.17.6 of ISO 13666:2019(E). For media (substrates, layers) that are absorption free, the luminous reflectance is calculated using the formula:

Luminous reflectance = 100% - luminous transmittance. The luminous reflectance of the spectacle lenses has been calculated accordingly.

Table 2: luminous transmittance lumT in % and luminous reflectance lumR in %

| | example 1 | example 2 | example 3 | comparative example 1 | comparative example 2 | comparative example 3 | comparative example 4 |
|---|---|---|---|---|---|---|---|
| lum T [%] | 93.1 | 92.9 | 92.9 | 89.2 | 92.8 | 92.4 | 90.3 |
| lum R [%] | 6.9 | 7.1 | 7.1 | 10.8 | 7.2 | 7.6 | 9.7 |

Compared to the spectacle lenses of comparative example 1 and comparative example 4, all spectacle lenses comprising the structured coating have a higher luminous transmittance, as calculated following the formula of note 1 to entry 3.17.6 of ISO 13666:2019(E). The maximum gain in luminous transmittance is achieved by the spectacle lens of example 1. By calculating the luminous reflectance = 100% - luminous transmittance, the lowest luminous reflectance is achieved for the spectacle lens of example 1. The luminous reflectance of the spectacle lens of example 1 is maximum reduced by 3.9 percentage points compared to the luminous reflectance of the spectacle lens of comparative example 1. The calculation of the luminous reflectance thereby considers the reflection at the front surface and the back surface of the spectacle lenses.

II.3 Determination of Bayer ratio

For the determination of the scratch resistance of the coating of the spectacle lenses according the examples and comparative example, the Bayer ratio was determined according to the COLTS operating procedure. A small pan loaded with a spectacle lens according to the examples or comparative examples as well as loaded with an uncoated diethylene glycol bisallylcarbonate spectacle lens (CR-39 lens) is shaken back and forth a distance of 4 inches, at 150 cycles per minute for 4 minutes. Holes that have been placed across the center section of the pan allow the spectacle lenses to protrude up through the center of each hole, resulting in abrasion in the presence of Kryptonite B as abrasion media. The spectacle lens according to the examples or comparative examples and the CR-39 lens had a hazemeter measurement completed prior to abrasion and another following abrasion. The resulting haze gain of the spectacle lens according to the examples and comparative examples is divided into the resulting haze of the CR-39 lens to establish a ratio of how many more times abrasion resistant the spectacle lens according to the examples or comparative examples is compared to the CR-39 lens. The Bayer ratio R is defined as $R = \frac{D_{std}}{D_{test}}$, $D_{std}$ divided by $D_{test}$ with $D_{std}$ being the final % haze value of the CR-39 lens minus the initial % haze value of the CR-39 lens and $D_{test}$ being the final % haze value of the spectacle lens according to the examples or comparative examples minus the initial % haze value of the spectacle lens according to the examples and comparative examples. The haze-gard plus, company BYK-Gardner GmbH, was used for haze measurement.

Table 3: results

| example / comparative example | water static contact angle [°] | Bayer ratio | structured coating |
|---|---|---|---|
| example 1 | 137 | 4 | yes |
| example 2 | 128 | 3 | yes |
| example 3 | 133 | 6 | yes |
| comparative example 1 | 105 | 4 | no |
| comparative example 2 | 125 | 1 | yes |
| comparative example 3 | 106 | 3 | yes |
| comparative example 4 | 74.5 | 1 | no (without any coating) |

**Claims**

**1.** Method for manufacturing a spectacle lens, the method comprising the step of

- curing a structured coating material on a surface of a spectacle lens, said structured coating material resulting in a structured coating on said surface of said spectacle lens,
a structure of said structured coating providing a reduced light reflection to said spectacle lens, said structured

coating material being a coating material, said coating material resulting in a coating providing an enhanced hydrophobicity to said spectacle lens, irrespective of said structure of said structured coating,
said coating material resulting in said coating provides an enhanced abrasion resistance to said spectacle lens, irrespective of said structure of said structured coating,
**characterized in that**
said coating material comprises a fluorine-free surfactant.

**2.** Method according to claim 1, **characterized in that** said coating material comprises said fluorine-free surfactant in one of the following ranges:

A) a range of 0.1 percent by weight to 1.5 percent by weight,
B) a range of 0.2 percent by weight to 1.4 percent by weight,
C) a range of 0.3 percent by weight to 1.3 percent by weight,
D) a range of 0.4 percent by weight to 1.2 percent by weight,

each based on the total weight of the coating material.

**3.** Method for manufacturing a spectacle lens, the method comprising the step of

- curing a structured coating material on a surface of a spectacle lens, said structured coating material resulting in a structured coating on said surface of said spectacle lens,
a structure of said structured coating providing a reduced light reflection to said spectacle lens, said structured coating material being a coating material, said coating material resulting in a coating providing an enhanced hydrophobicity to said spectacle lens, irrespective of said structure of said structured coating,
said coating material resulting in said coating provides an enhanced abrasion resistance to said spectacle lens, irrespective of said structure of said structured coating,
**characterized in that**
said coating material comprises a surfactant in one of the following ranges:

A) a range of 0.1 percent by weight to 1.5 percent by weight,
B) a range of 0.2 percent by weight to 1.4 percent by weight,
C) a range of 0.3 percent by weight to 1.3 percent by weight,
D) a range of 0.4 percent by weight to 1.2 percent by weight,

each based on the total weight of the coating material.

**4.** Method according to any one of the preceding claims 1 to 3, **characterized in that** said coating material comprises i) a hydrolysed organosilane, the organosilane being selected from at least one of the group consisting of (3-glycidyloxypropyl)trimethoxysilane, (3-glycidyloxypropyl)triethoxysilane and 2-(3,4-epoxycyclohexyl) ethyl trimethoxysilane, and ii) an epoxide, in at least one of the following percent by weight ratios:

A) said epoxide being 7 to 11 percent by weight of said hydrolysed organosilane,
B) said epoxide being 8 to 10 percent by weight of said hydrolysed organosilane.

**5.** Method according claim 4, **characterized in that** said hydrolysed organosilane is hydrolysed (3-glycidyloxypropyl) trimethoxysilane, said epoxide is a UV curable epoxide that is miscible with said hydrolysed organosilane and that has a viscosity in a range of 180 to 450 mPas at 25°C.

**6.** Method according to any one of the preceding claims, **characterized in that** the structure of the structured coating is selected such that said structure provides an enhanced hydrophobicity to said spectacle lens compared to the hydrophobicity of said spectacle lens comprising said coating without said structure.

**7.** Method according to any one of the preceding claims, **characterized in** the step of

- imprinting said coating material on said surface of said spectacle lens resulting in said structured coating material on said surface of said spectacle lens.

**8.** Method according to any one of the preceding claims, **characterized in that** curing said structured coating material is

achieved by UV radiation.

**9.** Method according to any one of the preceding claims, **characterized in that** said coating is providing said enhanced abrasion resistance to said spectacle lens compared to an abrasion resistance of a spectacle lens without said coating, when a Bayer ratio of said spectacle lens comprising said coating is equal to or greater than at least one of the following Bayer ratios:

(i) a Bayer ratio being equal to or greater than 3,
(ii) a Bayer ratio being equal to or greater than 3.5,
(iii) a Bayer ratio being equal to or greater than 4,
(iv) a Bayer ratio being equal to or greater than 4.5,
the Bayer ratio being determined as a difference in haze of a reference spectacle lens having a refractive index of 1.5 divided by a difference in haze of said spectacle lens comprising said coating, each difference in haze being determined as difference in haze after and before abrasion in presence of an abrasive medium,
said reference spectacle lens being an uncoated diethylene glycol bisallylcarbonate spectacle lens,
the haze after abrasion being measured after said reference spectacle lens and said spectacle lens comprising said coating each had been shaken back and forth at a distance of 4 inches, at 150 cycles per minute for 4 minutes in presence of said abrasive medium, said abrasive medium being Kryptonite B.

## Patentansprüche

**1.** Verfahren zum Herstellen eines Brillenglases, wobei das Verfahren den Schritt umfasst von

- Aushärten eines strukturierten Beschichtungsmaterials auf einer Fläche eines Brillenglases, wobei das strukturierte Beschichtungsmaterial zu einer strukturierten Beschichtung auf der Fläche des Brillenglases führt, wobei eine Struktur der strukturierten Beschichtung das Brillenglas mit einer reduzierter Lichtreflexion versieht, wobei das strukturierte Beschichtungsmaterial ein Beschichtungsmaterial ist, wobei das Beschichtungsmaterial zu einer Beschichtung führt, die das Brillenglas mit einer erhöhten Hydrophobizität versieht, unabhängig von der Struktur der strukturierten Beschichtung,
wobei das Beschichtungsmaterial, das zu der Beschichtung führt, das Brillenglas mit einer erhöhten Abriebbeständigkeit versieht, unabhängig von der Struktur der strukturierten Beschichtung,
**dadurch gekennzeichnet, dass**
das Beschichtungsmaterial ein fluorfreies Benetzungsmittel umfasst.

**2.** Verfahren nach Anspruch 1, **dadurch gekennzeichnet, dass** das Beschichtungsmaterial das fluorfreie Benetzungsmittel in einem der folgenden Bereiche umfasst:

A) ein Bereich von 0,1 Gewichtsprozent bis 1,5 Gewichtsprozent,
B) ein Bereich von 0,2 Gewichtsprozent bis 1,4 Gewichtsprozent,
C) ein Bereich von 0,3 Gewichtsprozent bis 1,3 Gewichtsprozent,
D) ein Bereich von 0,4 Gewichtsprozent bis 1,2 Gewichtsprozent,

jeweils basierend auf dem Gesamtgewicht des Beschichtungsmaterials.

**3.** Verfahren zum Herstellen eines Brillenglases, wobei das Verfahren den Schritt umfasst von

- Aushärten eines strukturierten Beschichtungsmaterials auf einer Fläche eines Brillenglases, wobei das strukturierte Beschichtungsmaterial zu einer strukturierten Beschichtung auf der Fläche des Brillenglases führt, wobei eine Struktur der strukturierten Beschichtung das Brillenglas mit einer reduzierter Lichtreflexion versieht, wobei das strukturierte Beschichtungsmaterial ein Beschichtungsmaterial ist, wobei das Beschichtungsmaterial zu einer Beschichtung führt, die das Brillenglas mit einer erhöhten Hydrophobizität versieht, unabhängig von der Struktur der strukturierten Beschichtung,
wobei das Beschichtungsmaterial, das zu der Beschichtung führt, das Brillenglas mit einer erhöhten Abriebbeständigkeit versieht, unabhängig von der Struktur der strukturierten Beschichtung,
**dadurch gekennzeichnet, dass**
das Beschichtungsmaterial ein Benetzungsmittel in einem der folgenden Bereiche umfasst:

A) ein Bereich von 0,1 Gewichtsprozent bis 1,5 Gewichtsprozent,
B) ein Bereich von 0,2 Gewichtsprozent bis 1,4 Gewichtsprozent,
C) ein Bereich von 0,3 Gewichtsprozent bis 1,3 Gewichtsprozent,
D) ein Bereich von 0,4 Gewichtsprozent bis 1,2 Gewichtsprozent,

jeweils basierend auf dem Gesamtgewicht des Beschichtungsmaterials.

**4.** Verfahren nach einem der vorhergehenden Ansprüche 1 bis 3, **dadurch gekennzeichnet, dass** das Beschichtungsmaterial i) ein hydrolysiertes Organosilan, wobei das Organosilan aus mindestens einem aus der Gruppe bestehend aus (3-Glycidyloxypropyl)-Trimethoxysilan, (3-Glycidyloxypropyl)-Triethoxysilan und 2-(3,4-Epoxycyclohexyl)-Ethyltrimethoxysilan ausgewählt wird, und ii) ein Epoxid, in mindestens einem der folgenden Gewichtsprozentverhältnisse, umfasst:

A) das Epoxid beträgt 7 bis 11 Gewichtsprozent des hydrolysierten Organosilans,
B) das Epoxid beträgt 8 bis 10 Gewichtsprozent des hydrolysierten Organosilans.

**5.** Verfahren nach Anspruch 4, **dadurch gekennzeichnet, dass** das hydrolysierte Organosilan hydrolysiertes ( 3-Glycidyloxypropyl)-Trimethoxysilan ist, wobei das Epoxid ein UV-aushärtbares Epoxid ist, das mit dem hydrolysierten Organosilan mischbar ist und das eine Viskosität in einem Bereich von 180 bis 450 mPas bei 25°C aufweist.

**6.** Verfahren nach einem der vorhergehenden Ansprüche, **dadurch gekennzeichnet, dass** die Struktur der strukturierten Beschichtung derart ausgewählt wird, dass die Struktur das Brillenglas mit einer, im Vergleich mit der Hydrophobizität des Brillenglases, das die Beschichtung ohne die Struktur aufweist, erhöhten Hydrophobizität versieht.

**7.** Verfahren nach einem der vorhergehenden Ansprüche, **gekennzeichnet durch** den Schritt von

- Prägen des Beschichtungsmaterials auf der Fläche des Brillenglases, was zu dem strukturierten Beschichtungsmaterial auf der Fläche des Brillenglases führt.

**8.** Verfahren nach einem der vorhergehenden Ansprüche, **dadurch gekennzeichnet, dass** Aushärten des strukturierten Beschichtungsmaterials durch UV-Strahlung erreicht wird.

**9.** Verfahren nach einem der vorhergehenden Ansprüche, **dadurch gekennzeichnet, dass** die Beschichtung das Brillenglas mit einer, im Vergleich mit einer Abriebbeständigkeit eines Brillenglases ohne die Beschichtung, erhöhten Abriebbeständigkeit versieht, wenn ein Bayer-Verhältnis des Brillenglases, das die Beschichtung aufweist, größer oder gleich mindestens einem der folgenden Bayer-Verhältnisse ist:

(i) ein Bayer-Verhältnis, das größer oder gleich 3 ist,
(ii) ein Bayer-Verhältnis, das größer oder gleich 3,5 ist,
(iii) ein Bayer-Verhältnis, das größer oder gleich 4 ist,
(iv) ein Bayer-Verhältnis, das größer oder gleich 4,5 ist,
wobei das Bayer-Verhältnis bestimmt wird als eine Differenz einer Trübung eines Referenzbrillenglases, das einen Brechungsindex von 1,5 aufweist, dividiert durch eine Differenz einer Trübung des Brillenglases, das die Beschichtung umfasst, wobei jede Differenz der Trübung als eine Differenz von Trübung nach und vor Abrieb in Gegenwart eines abrasiven Mediums bestimmt wird,
wobei das Referenzbrillenglas ein unbeschichtetes Diethylenglycolbisallylcarbonat-Brillenglas ist,
wobei die Trübung nach Abrieb gemessen wird, nachdem das Referenzbrillenglas und das Brillenglas, das die Beschichtung aufweist, jeweils für einen Weg von 4 Zoll, mit 150 Zyklen pro Minute für 4 Minuten in Gegenwart des abrasiven Mediums hin und her geschüttelt wurden, wobei das abrasive Medium Kryptonite B ist.

## Revendications

**1.** Procédé de fabrication d'un verre de lunettes, le procédé comprenant l'étape suivante :

- durcissement d'un matériau de revêtement structuré sur une surface d'un verre de lunettes, ledit matériau de revêtement structuré donnant naissance à un revêtement structuré sur ladite surface dudit verre de lunettes,

une structure dudit revêtement structuré conférant une réflexion réduite de la lumière audit verre de lunettes, ledit matériau de revêtement structuré étant un matériau de revêtement, ledit matériau de revêtement donnant naissance à un revêtement conférant une hydrophobie accrue audit verre de lunettes, quelle que soit ladite structure dudit revêtement structuré,
ledit matériau de revêtement donnant naissance audit revêtement conférant une résistance accrue à l'abrasion audit verre de lunettes, quelle que soit ladite structure dudit revêtement structuré,
**caractérisé en ce que**
ledit matériau de revêtement comprend un tensioactif dépourvu de fluor.

**2.** Procédé selon la revendication 1, **caractérisé en ce que** ledit matériau de revêtement comprend ledit tensioactif dépourvu de fluor dans une des plages suivantes :

A) une plage de 0,1 pour cent en poids à 1,5 pour cent en poids,
B) une plage de 0,2 pour cent en poids à 1,4 pour cent en poids,
C) une plage de 0,3 pour cent en poids à 1,3 pour cent en poids,
D) une plage de 0,4 pour cent en poids à 1,2 pour cent en poids,

chacune rapportée au poids total du matériau de revêtement.

**3.** Procédé de fabrication d'un verre de lunettes, le procédé comprenant l'étape suivante :

- durcissement d'un matériau de revêtement structuré sur une surface d'un verre de lunettes, ledit matériau de revêtement structuré donnant naissance à un revêtement structuré sur ladite surface dudit verre de lunettes, une structure dudit revêtement structuré conférant une réflexion réduite de la lumière audit verre de lunettes, ledit matériau de revêtement structuré étant un matériau de revêtement, ledit matériau de revêtement donnant naissance à un revêtement conférant une hydrophobie accrue audit verre de lunettes, quelle que soit ladite structure dudit revêtement structuré,
ledit matériau de revêtement donnant naissance audit revêtement conférant une résistance accrue à l'abrasion audit verre de lunettes, quelle que soit ladite structure dudit revêtement structuré,
**caractérisé en ce que**
ledit matériau de revêtement comprend un tensioactif dans une des plages suivantes :

A) une plage de 0,1 pour cent en poids à 1,5 pour cent en poids,
B) une plage de 0,2 pour cent en poids à 1,4 pour cent en poids,
C) une plage de 0,3 pour cent en poids à 1,3 pour cent en poids,
D) une plage de 0,4 pour cent en poids à 1,2 pour cent en poids,

chacune rapportée au poids total du matériau de revêtement.

**4.** Procédé selon l'une quelconque des revendications 1 à 3 précédentes, **caractérisé en ce que** ledit matériau de revêtement comprend i) un organosilane hydrolysé, l'organosilane en étant au moins un choisi dans le groupe constitué par le (3-glycidyloxypropyl)triméthoxysilane, le (3-glycidyloxypropyl)triéthoxysilane et le 2-(3,4-époxycyclohexyl)éthyltriméthoxysilane, et ii) un époxyde, dans au moins un des rapports de pourcentages pondéraux suivants :

A) ledit époxyde représentant 7 à 11 pour cent en poids dudit organosilane hydrolysé,
B) ledit époxyde représentant 8 à 10 pour cent en poids dudit organosilane hydrolysé.

**5.** Procédé selon la revendication 4, **caractérisé en ce que** ledit organosilane hydrolysé est le (3-glycidyloxypropyl) triméthoxysilane hydrolysé, ledit époxyde est un époxyde durcissable aux UV qui est miscible avec ledit organosilane hydrolysé et qui a une viscosité dans une plage de 180 à 450 mPa.s à 25 °C.

**6.** Procédé selon l'une quelconque des revendications précédentes, **caractérisé en ce que** la structure du revêtement structuré est choisie de telle sorte que ladite structure confère une hydrophobicité accrue audit verre de lunettes en comparaison de l'hydrophobie dudit verre de lunettes comprenant ledit revêtement sans ladite structure.

**7.** Procédé selon l'une quelconque des revendications précédentes, le procédé par l'étape suivante :

- impression dudit matériau de revêtement sur ladite surface dudit verre de lunettes, ce qui aboutit audit matériau de revêtement structuré sur ladite surface dudit verre de lunettes.

**8.** Procédé selon l'une quelconque des revendications précédentes, **caractérisé en ce que** le durcissement dudit matériau de revêtement structuré est réalisé avec un rayonnement UV.

**9.** Procédé selon l'une quelconque des revendications précédentes, **caractérisé en ce que** ledit revêtement confère ladite résistance accrue à l'abrasion audit verre de lunettes en comparaison d'une résistance à l'abrasion d'un verre de lunettes sans ledit revêtement, lorsqu'un rapport Bayer dudit verre de lunettes comprenant ledit revêtement est égal ou supérieur à au moins un des rapports Bayer suivants :

(i) un rapport Bayer égal ou supérieur à 3,
(ii) un rapport Bayer égal ou supérieur à 3,5,
(iii) un rapport Bayer égal ou supérieur à 4,
(iv) un rapport Bayer égal ou supérieur à 4,5,
le rapport Bayer étant déterminé comme une différence de voile d'un verre de lunettes de référence ayant un indice de réfraction de 1,5 divisée par une différence de voile dudit verre de lunettes comprenant ledit revêtement, chaque différence de voile étant déterminée comme la différence de voile après et avant abrasion en présence d'un milieu abrasif,
ledit verre de lunettes de référence étant un verre de lunettes en bisallylcarbonate de diéthylène glycol sans revêtement,
le voile après abrasion étant mesuré après que ledit verre de lunettes de référence et ledit verre de lunettes comprenant ledit revêtement ont été secoués d'avant en arrière, chacun sur une distance de 4 pouces à 150 cycles par minute pendant 4 minutes en présence dudit milieu abrasif, ledit milieu abrasif étant la Kryptonite B.

Figure 1

spectral transmittance in %

95
93
91
89
87
85

380 430 480 530 580 630 680 730 780

wavelength / nm

example 1
comparative example 2
comparative example 3
example 3
comparative example 1
example 2
comparative example 4

Figure 2

1
2
3

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- CN 109975896 A1
- WO 2017025128 A1
- CN 109975896 A
- US 20180229420 A1
- WO 0151220 A2